# EUROPÄISCHE PATENTSCHRIFT

(11) **EP 1 784 583 B1**
(45) Veröffentlichungstag und Bekanntmachung des Hinweises auf die Patenterteilung: **25.09.2013**
(21) Anmeldenummer: 06762280.3
(22) Anmeldetag: 29.06.2006
(51) Int. Cl.: F16F 15/02

(54) **BEFESTIGUNG DIE ÜBERTRAGUNG VON SCHOCKS UND VIBRATIONEN UNTERDRÜCKT**
FASTENING MEANS PREVENTING THE TRANSMISSION OF SHOCKS AND VIBRATIONS
DISPOSITIF DE FIXATION QUI INHIBE LA TRANSMISSION DE CHOCS ET DE VIBRATIONS

(30) Priorität: 03.07.2005 DE 102005031303; 17.04.2006 DE 102006018071
(43) Veröffentlichungstag der Anmeldung: 16.05.2007
(73) Patentinhaber: Tropf, Hermann, 68789 St. Leon-Rot (DE)
(72) Erfinder: Tropf, Hermann, 68789 St. Leon-Rot (DE)
(74) Vertreter: Vossius & Partner
(86) Internationale Anmeldenummer: PCT/EP2006/006329
(87) Internationale Veröffentlichungsnummer: WO 2007/003345

(56) Entgegenhaltungen:
- EP-A- 0 902 253
- GB-A- 1 145 972
- US-A- 6 032 552
- US-A- 6 033 312
- US-A1- 2004 108 443
- DATABASE WPI Section PQ, Week 198709 Derwent Publications Ltd., London, GB; Class Q63, AN 1987-063019 XP002397032 -& SU 1 240 973 A (MOSC ENG CONS INST) 30. Juni 1986 (1986-06-30)

## Beschreibung

Die Erfindung betrifft eine Vorrichtung zur Befestigung oder Kraftverbindung, mit der eine Übertragung von Schocks und Vibrationen weitgehend vermieden wird.

### Stand der Technik:

Ein klassisches Konstruktionselement in Bautechnik und Maschinenbau ist der sog. Schwingungstilger, kurz Tilger. In der Bautechnik sind es schwingende Massen, die zur Stabilisierung eingesetzt werden, z.B. Pendel zur Erdbebensicherung hoher Türme. Im Maschinenbau handelt es sich um federnd aufgehängte, speziell dimensionierte Massen, die an einer bestimmten Stelle montiert werden, wodurch eine Kompensation erreicht wird; diese gilt jedoch nur für eine ganz bestimmte Frequenz, die für bestimmte Anwendungen fein abgestimmt werden muss. Eine Tilgung von Frequenzen, auf die der Tilger nicht abgestimmt ist, findet damit nicht statt.

Die GB 1498222 betrifft eine Vorrichtung zur Kupplung der Antriebs- bzw. Auftriebsvorrichtung eines Hubschraubers mit dem Hubschrauberrumpf. Diese Vorrichtung weist einen Träger auf, der von den durch die Rotorblätter erzeugten Vertikalkräften in Schwingungen versetzt wird. Der Hubschrauberrumpf ist mit dem Träger an dessen äußeren Enden verbunden. Dort befinden sich in montiertem Zustand zwangsweise Schwingungsknoten, so dass Bewegungen von dem Rotor nicht auf den Rumpf übertragen werden. In nicht montiertem Zustand können sich dort keine Schwingungsknoten befinden.

Die GB 2080921 A betrifft eine vibrationsdämpfende Handgriffvorrichtung für ein elektromotorisches Werkzeug, von dem Vibrationen ausgehen. Die Handgriffvorrichtung umfasst ein Schwingungsaufnahmeteil, das über ein Verbindungsteil fest mit dem Gehäuse des Werkzeugs verbunden ist und das dazu geeignet ist, eine Anfangsschwingung von dem Werkzeug aufzunehmen. Ein Paar von ersten Schwingungsmassenkörpern ist an den jeweiligen Enden des Schwingungsaufnahmeteils befestigt. Ein weiteres Paar von zweiten Schwingungsmassenkörpern ist außenseitig von den jeweiligen ersten Schwingungsmassenkörpern vorgesehen und über eine elastische Feder, hier als Dämpfungsteil bezeichnet, mit dem jeweiligen ersten Schwingungsmassenkörper verbunden. Ein Paar von dritten Schwingungsmassenkörpern ist innenseitig von den jeweiligen ersten Schwingungsmassenkörpern vorgesehen. An den dritten Schwingungsmassenkörpern ist ein Handgriff befestigt. Durch entsprechende Einstellung der Massen jedes Schwingungsmassenkörpers und das als Feder realisierte sogenannte Dämpfungsteil soll ein Schwingungsknoten ausgebildet werden, der in der Mitte des Schwingungsaufnahmeteils, d.h. zwischen dem Paar der dritten Schwingungsmassenkörper liegt. Durch die Anordnung soll der Handgriff physikalisch und mechanisch von anderen Stellen der Schwingungssysteme isoliert sein. Die außerhalb des Griffs liegenden Federn und Schwingmassen bergen Verletzungsgefahr.

Die GB-A-2 087 033 betrifft ein System zum Isolieren von Vibrationen. Das Isolationssystem vom Antiresonanztyp soll die Übertragung von Vibrationen von einem Körper, der die Vibrationen erzeugt, auf einen aufgehängten Körper vermeiden und zwar sowohl entlang von drei zueinander senkrechten Achsen als auch um diese drei Achsen. Am Beispiel eines Helikopters, bei dem das Isolationssystem zwischen einer Helikopteraufhängung und einem Rotorantriebssystem angeordnet ist, weist das System vier Isolatoren auf, die in der durch zwei Achsen definierten Ebene liegen. Jeder Isolator weist eine Masse auf, die von einem Federstab getragen wird, der zwischen dem Antrieb und der Helikopteraufhängung angeordnet ist. Die Position der Masse an dem Federstab ist mittels eines Motors einstellbar, wodurch der Isolator abstimmbar ist, abhängig von einer Variablen, zum Beispiel der Rotorgeschwindigkeit.

Die DE 103 09 825 A1 betrifft eine Windenergieanlage mit einem mit Abspannungen versehenen Mast. Zur Dämpfung von Schwingungen des Masts sind im Kraftfluss der Abspannungen steuerbare hydraulische Dämpfungsvorrichtungen angeordnet.

### Aufgabe:

Aufgabe der Erfindung ist die Bereitstellung einer Befestigung oder Kraftverbindung mit der eine Übertragung von Schwingungen weitgehend unabhängig von der erregenden Frequenz (in einem möglichst großen Frequenzbereich) vermieden wird, insbesondere bei breitbandiger Erregung wie kurz einwirkenden Schocks.

### Lösung:

Die Aufgabe wird gelöst mit einer Vorrichtung nach den unabhängigen Ansprüchen.

Die Vorrichtung zum Verbinden eines Bauteils an einer Baueinheit hat : a) mindestens eine mit der Baueinheit und dem Bauteil gekoppelte Schwingeinrichtung, die ein bestimmtes Eigenschwingverhalten aufweist, bei dem mindestens ein Schwingungsknoten bei Anregung durch Stoß oder Vibration ausgebildet wird, b) wobei das Bauteil an der Schwingeinrichtung an mindestens einer Verbindungsstelle, die an oder in der Nähe des/der Schwingungsknoten(s) liegt, angeordnet ist, und c) mindestens eine Dämpfungseinrichtung zum Dämpfen einer Grundschwingung der Schwingeinrichtung in Bezug zu der Baueinheit.

Das Bauteil ist an der Schwingeinrichtung drehbar befestigt.

Erfindungsgemäß erfolgt die Befestigung an oder in der Nähe des oder der freien Schwingungsknoten(s). Freie Schwingungsknoten befinden sich immer im Inneren eines Teils.

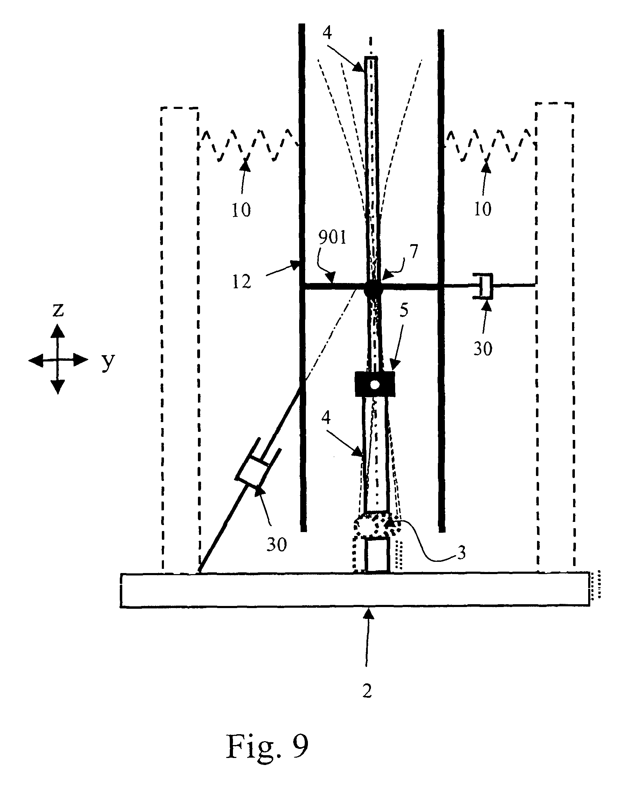

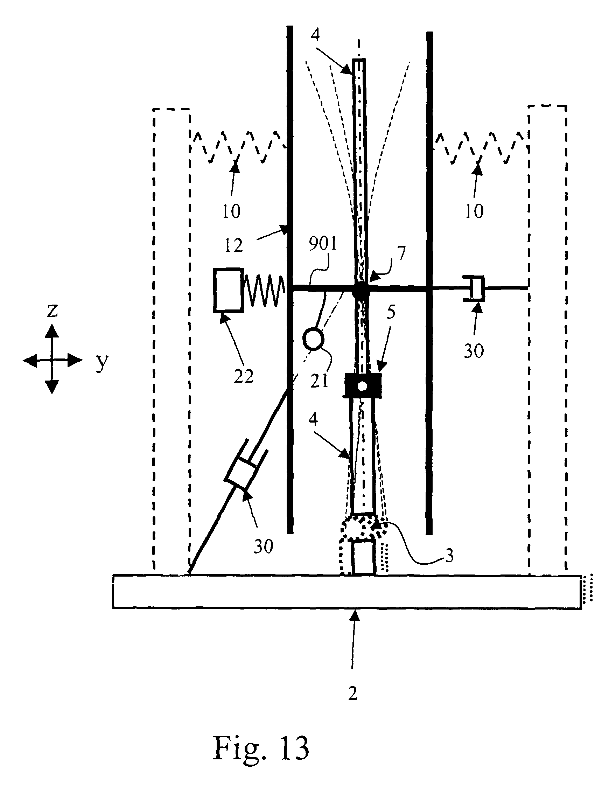

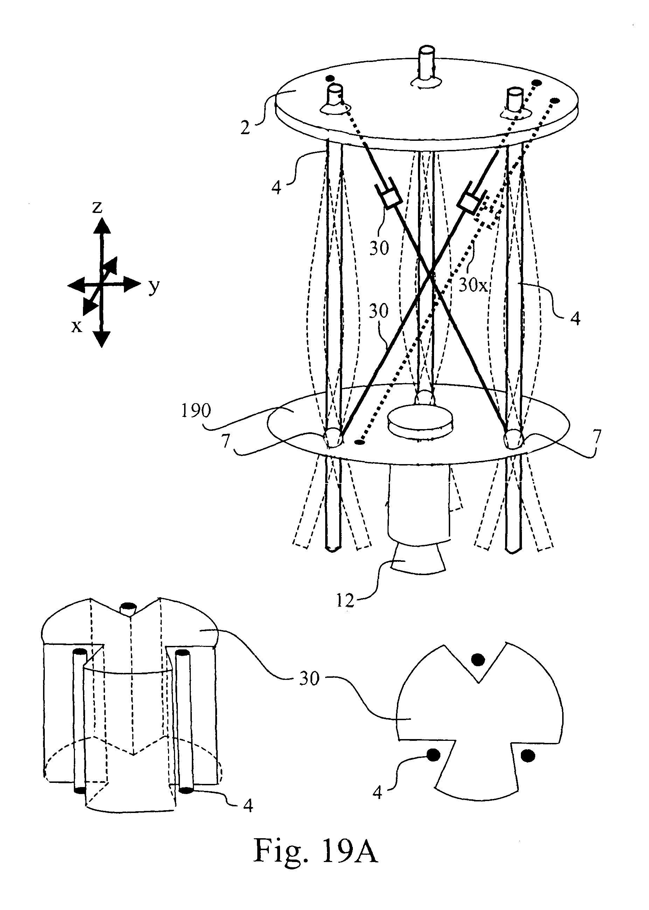

Die Dämpfungseinrichtung ist direkt oder mittels eines ersten Bauelements an der Schwingeinrichtung an oder in der Nähe mindestens eines der Schwingungsknoten befestigt. Beispiele für erste Bauelemente finden sich in den Ausführungsbeispielen (z.B. an Platte 190 in Fig. 19A, Bauelement 901 in Fig. 9 und Fig. 13; Beschreibung siehe unten).

Die Dämpfungseinrichtung ist mit der Baueinheit derart verbunden, dass die Dämpfungseinrichtung eine Wirkkomponente aufweist, die in der Bewegungsrichtung der Verbindungsstelle bei Grundschwingung liegt.

Durch Stoss oder Vibration eingebrachte Energie wird zumindest teilweise in Energie der Schwingung um Schwingungsknoten umgesetzt.

Die Schwingeinrichtung wird im folgenden auch kurz Schwinger genannt.

Ist sie mit der Baueinheit verbunden, ansonsten aber frei, so bilden sich an der Schwingeinrichtung, bei Stößen oder Vibrationen, Schwingungen um mindestens einen Schwingungsknoten, in diesem Fall auch freier Schwingungsknoten genannt.

Eine Verbindungsstelle, an der das Bauteil drehbar an der Schwingeinrichtung befestigt ist, wird im folgenden auch "erster Punkt" genannt. Der erste Punkt befindet sich an einem freien Schwingungsknoten oder zumindest in dessen Nähe. Befindet er sich nur in dessen Nähe, so wird aufgrund der Position der Verbindungsstelle und der dort befindlichen Masse die Position des Schwingungsknotens von der des freien Schwingungsknotens zum ersten Punkt hin verlagert ("Verziehen des Schwingungsknotens"). Zur Vereinfachung der Darstellung wird in den folgenden Beispielen angenommen, daß der erste Punkt mit dem freien Schwingungsknoten zusammenfällt.

Im Gegensatz zu o.g. GB 1498222 befindet sich bei dieser Erfindung die Befestigung nicht an einem durch die Befestigung erzwungenen Schwingungsknoten, sondern an einem freien Schwingungsknoten oder zumindest in dessen Nähe.

Das Bauteil wird im folgenden auch Masse genannt.

Die Schwingungsknoten stehen bei den o.g. Schwingungen still. Die o.g. Schwingungen mit mindestens einem Schwingungsknoten sind jedoch ggf. mit einer (niederfrequenteren) Grundschwingung überlagert, bei der sich die Schwingungsknoten bewegen.

Die Schwingungen um Schwingungsknoten sind zur Schockabsorbtion erwünscht, während die Grundschwingung unerwünscht ist. Die Erfindung basiert auf dem Grundgedanken, eine durch Stoss oder Vibration in ein System eingebrachte Schockenergie mindestens teilweise in Schwingungsenergie umzusetzen. Durch eine Verbindung eines Bauteils an der Schwingeinrichtung im Bereich des Schwingungsknotens wird die Übertragung der Vibrationen vermieden.

Durch die Dämpfungseinrichtung wird eine eventuell auftauchende, unerwünschte Grundschwingung unterdrückt oder zumindest verringert. Sie wird so dimensioniert, daß einerseits die Grundschwingung möglichst schnell abklingt, daß andererseits über die Dämpfungseinrichtung keine wesentliche Schockübertragung von der Baueinheit zum Bauteil stattfindet. Diese Dimensionierung hat sich überraschenderweise für viele Fälle als unkritisch erwiesen.

Eine Unterdrückung der Grundschwingung durch eine Dämpfungseinrichtung ist in den o.g. GB 2080921 A und GB 1498222 nicht gegeben.

Als Schwinger ist jedes schwingfähige Gebilde geeignet, das frei um einen Punkt schwingen kann. Der Schwinger kann aus einem einzelnen Element bestehen oder aus mehreren zusammengesetzt sein. Der Schwinger besteht aus mindestens einem federnden Element und kann durch Hilfsmassen und dämpfende Elemente ergänzt sein (bevorzugt an natürlichen Schwingungsbäuchen montiert, Beispiele siehe unten).

Die Frequenz eines optional zusätzlich angebrachten Tilgers ist auf die Grundschwingung des Schwingers abgestimmt.

Werden sowohl Tilger als auch dämpfendes Glied verwendet, so sind vorzugsweise die Dämpfungscharakteristik des Tilgers (ein Tilgerdämpfer parallel zur Tilgerfeder angeordnet, wie bekannt) und des dämpfenden Glieds so aufeinander abgestimmt, daß die Grundschwingung spätestens nach wenigen Schwingungen verschwindet.

### Anwendungsgebiet:

Die Erfindung hat den Vorteil, dass die Baueinheit und das Bauteil in einem bestehenden System oder einer bestehenden Konstruktion nicht verändert werden müssen. Stattdessen kann die Ausgestaltung und Dimensionierung der Schwingeinrichtung mit der Dämpfungseinrichtung unabhängig von Baueinheit und Bauteil erfolgen, wobei die auftretenden Betriebsbedingungen und/oder Kräfte und/oder Massen der Baueinheit und des Bauteils berücksichtigt werden können. Dies gilt, bei ggf. vorhandenen Eigenschwingungen der Baueinheit um Schwingungsknoten, unabhängig von deren Position und Zugänglichkeit. Darüber hinaus kann die Erfindung nach einem Baukastenprinzip auf verschiedene Systeme angewendet werden.

Die erfindungsgemäße Lösung kann für eine Vielzahl von Anwendungen eingesetzt werden: überall, wo ein Gegenstand (Masse) gegen Schocks oder Vibrationen einer Einrichtung entkoppelt werden soll, mit der der Gegenstand in mechanischer Verbindung steht. Motivation zum Einsatz des Systems kann es auch sein, eine auf Seite der Baueinheit befindliche Antriebseinheit (Motor, Achse, Getriebe) zu schonen: durch die federnde Verbindung zwischen Baueinheit und Bauteil wird die Antriebsseite geschont, ohne daß es zu Schaukelbewegungen kommt, wie bei einfachen Feder-Masse-Systemen.

Die Erfindung ist anwendbar für eine schock- und schwingungstilgende Befestigung von Kameras an einem Roboterhandling: Aufgrund von Regelungsschwingungen des Roboters ergeben sich Vibrationen, die die Bildaufnahme stören, insbesondere bei langen Auslegern, ebenso bei abrupten Änderungen des Geschwindigkeitsvektors; letzteres kann bei Einzelbildaufnahmen beträchtliche Beruhigungszeiten erforderlich machen, die taktzeitverlängernd sind. Solche Taktzeitverlängerungen können für die Wirtschaftlichkeit einer Gesamtanlage von entscheidender Bedeutung sein.

Die oben geschilderte Aufgabe tritt in analoger Weise auf bei stark beschleunigten Teilen in Geräten, z.B. bei der Führung von Druck-Köpfen in Druckern oder bei der Draht-Zuführeinrichtung von Bondmaschinen, aber auch Beschriftungseinrichtungen.

Die Erfindung kann u.a. eingesetzt werden zur stoß- und vibrationsunterdrückenden Halterung von Kameras, die an vibrierenden Masten montiert sind oder an Gestellen, in deren Nähe sich z.B. eine Stanze befindet, von Spiegeln (Rückspiegel von Fahrzeugen, Spiegel in Meßeinrichtungen wie Spiegelgalvanometern), von aktiven Elementen wie Laserpointer, wie sie z.B. für Vermessungsaufgaben in der Bautechnik verwendet werden, von Lichtschlitzprojektoren (strukturiertes Licht für Bildverarbeitung), von Fahrzeugscheinwerfern und von Projektoren (z.B. Beamer, die an vibrierenden Gebäudeteilen befestigt werden müssen).

Die Erfindung kann auch eingesetzt werden zur Befestigung von Festplatten oder sonstigen schockempfindlichen Einrichtungen oder zur schock- und schwingungstilgenden Aufstellung von Labortischen und Geräten.

Die Erfindung kann auch eingesetzt werden zur Rückstoß- und/oder Vibrationsunterdrückung bei handbetriebenen Geräten wie Preßlufthämmern, Schlagbohrern, Heckenscheren, Handschraubautomaten und dergleichen, aber auch für einfache Hämmer.

Die Erfindung kann auch eingesetzt werden zur Stoß- und Vibrationsunterdrückung an Fahrzeugen (Radaufhängung, Fahrersitz, Fahrradsattel etc.).

Die Erfindung kann auch eingesetzt werden als vibrationsdäromende Motorhalterung in Fahrzeugen oder Gerätegehäusen.

Die Erfindung kann auch eingesetzt werden zur stoß- und vibrationsunterdrückenden Halterung von Meßaufnehmern wie Mikrophonen, besonders interessant zur Aufnahme des Körperschalls des Teils, an dem der Aufnehmer selbst befestigt ist.

Die Erfindung kann auch eingesetzt werden bei Maschinengestellen, zur Unterdrückung der Rückwirkung daran befestigter, beschleunigter Teile (durch Linearachse, Pneumatikzylinder, Roboter, Bandstopper etc.) auf das Gestell.

Die Erfindung kann auch eingesetzt werden zur Befestigung von Lautsprechern oder Lautsprechersystemen, um die - in der Regel nicht vorhersagbaren - Resonanzen der Teile, an denen der Lausprecher befestigt ist oder mit denen er direkt oder indirekt in Verbindung steht, zu unterdrücken. In analoger Weise kann die Erfindung auch eingesetzt werden zur Geräuschdämpfung, z.B. bei der Motorbefestigung, um unerwünschte (mehr als eine Frequenz umfassende) Resonanzen eines Fahrzeugs zu unterdrücken.

Die Erfindung kann auch eingesetzt werden zur Absorption rotatorischer Schocks, wie z.B. im Antriebsstrang von Automobilen, bei Bearbeitungsmaschinen oder bei (handbetriebenen) Schraubautomaten.

Die Erfindung kann auch eingesetzt werden zur Schockabsorption an Gebäuden insbesondere mit dem Ziel der Erdbebensicherung.

Die Erfindung wird nachstehend anhand von nicht einschränkenden Ausführungsbeispielen der Zeichnung näher erläutert. Es zeigen:
Fig. 1 eine schematische Ansicht eines stabförmigen Biegeschwingers mit einseitiger Einspannung über ein Gelenk (linke Abbildung) und einseitiger fester Einspannung (rechte Abbildung) mit der Ausbildung eines feststehenden Schwingungsknotens ("erste Harmonische"),
Fig. 2 einen stabförmigen Biegeschwinger wie in Fig. 1 dargestellt mit einer zusätzlich vorhandenen Grundschwingung,
Fig. 3 eine schematische Ansicht einer ersten erfindungsgemäßen Ausführungsform eines stabförmigen Biegeschwingers mit Dämpfungseinrichtung (linke Abbildung mit einem schrägen und einem horizontalen Dämpfer in y-Richtung, rechte Abbildung mit einem, optional zwei schrägen Dämpfern),
Fig. 4 eine schematische Ansicht einer zweiten erfindungsgemäßen Ausführungsform mit zweifach gekrümmtem Stab,(linke Abbildung mit Schwingungen in x-Richtung, rechte Abbildung mit Schwingungen in y-Richtung), mit teilweise näherungsweise zusammenfallenden Schwingungsknoten,
Fig. 5 eine schematische Ansicht einer dritten erfindungsgemäßen Ausführungsform mit einfach gekrümmten Stab (linke Abbildung mit Schwingungen in x-Richtung, rechte Abbildung mit Schwingungen in y- und z-Richtung), mit teilweise näherungsweise zusammenfallenden Schwingungsknoten,
Fig. 6A eine schematische Ansicht einer vierten erfindungsgemäßen Ausführungsform mit einem gekrümmten Stab (mit Schwingungen in x- und y-Richtung), mit zwei ersten Punkten an verschiedenen Schwingungsknoten des selben Schwingers.
Fig. 6B eine schematische Ansicht einer fünften erfindungsgemäßen Ausführungsform eines gekrümmten Stabes mit drei Freiheitsgraden (mit Schwingungen in x-, y- und z-Richtung),
Fig. 6C eine schematische Ansicht einer erfindungsgemäßen Ausführungsform mit zwei hintereinandergeschalteten Schwingern für drei Freiheitsgrade,
Fig. 7A eine schematische Ansicht einer sechsten erfindungsgemäßen Ausführungsform mit Schraubenfeder, mit Transversalschwingungen,
Fig. 7B eine schematische Ansicht einer siebten erfindungsgemäßen Ausführungsform mit einer Kombination aus Schraubenfeder und starren Stab,
Fig. 7C eine schematische Ansicht einer achten erfindungsgemäßen Ausführungsform mit einem Kernmaterial und Hilfskörpern, mit vergrößerter Ausschnittsansicht von drei Varianten,
Fig. 8 eine schematische Ansicht einer neunten erfindungsgemäßen Ausführungsform mit drei ineinander gedrehten Schraubenfedern, und Prinzipskizze in der Aufsicht von drei Schwingungsknoten (Abbildung oben),
Fig. 9 eine schematische Ansicht einer zehnten erfindungsgemäßen Ausführungsform mit einem stehenden Schwingstab,
Fig. 10 eine schematische Ansicht einer elften erfindungsgemäßen Ausführungsform mit einem beidseitig eingespannten Schwinger,
Fig. 11 eine schematische Ansicht einer zwölften erfindungsgemäßen Ausführungsform mit fest eingespanntem Schwinger,
Fig. 12A eine schematische Ansicht einer dreizehnten erfindungsgemäßen Ausführungsform mit transversal schwingenden Elementen, wobei die Einspannung des Schwingstabs über ein Gelenk erfolgt,
Fig. 12B eine schematische Ansicht einer vierzehnten erfindungsgemäßen Ausführungsform mit transversal schwingenden Elementen bei fester Einspannung des Schwingstabs (Abbildung oben mit Dämpfer, Abbildung unten für einen höheren Schwingungsmodus),
Fig. 13 eine schematische Ansicht einer fünfzehnten erfindungsgemäßen Ausführungsform, ähnlich zu der zehnten Ausführungsform, mit Tilger,
Fig. 14 eine schematische Ansicht einer sechzehnten erfindungsgemäßen Ausführungsform, ähnlich zu der elften Ausführungsform, mit Tilger,
Fig. 15 eine schematische Ansicht einer siebzehnten erfindungsgemäßen Ausführungsform ähnlich zu der vierzehnten Ausführungsform mit Schwingstäben unterschiedlicher Resonanzfrequenz,
Fig. 16 eine schematische Ansicht einer achzehnten erfindungsgemäßen Ausführungsform mit einer Parallelschaltung von Schwingstäben unterschiedlicher Dicke,
Fig. 17 eine schematische Ansicht einer neunzehnten erfindungsgemäßen Ausführungsform mit einer Hintereinanderschaltung von zwei Anordnungen gemäß der achtzehnten Ausführungsform,
Fig. 18 eine schematische Ansicht einer zwanzigsten erfindungsgemäßen Ausführungsform eines Schwingers aus mehreren schwingfähigen Elementen,
Fig. 19A eine schematische Ansicht einer einundzwanzigsten erfindungsgemäßen Ausführungsform mit parallel angeordneten Stäben mit einer Detailansicht einer alternativen Ausgestaltung einer Dämpfungseinrichtung (perspektivische Abbildung links unten, Aufsicht rechts unten),
Fig. 19B eine schematische Ansicht einer zweiundzwanzigsten erfindungsgemäßen Ausführungsform ähnlich zu der einundzwanzigsten Ausführungsform, jedoch für drei Freiheitsgrade, mit Schwingstäben gemäß der fünften Ausführungsform,
Fig. 19C eine schematische Ansicht entsprechend der zweiundzwanzigsten Ausführungsform, zur Erläuterung der Dimensionierung der Dämpfungseinrichtung,
Fig. 20 eine schematische Ansicht eines erfindungsgemäßen Pressluftmeißels oder dergleichen,
Fig. 21 eine schematische Ansicht einer erfindungsgemäßen Schlagbohrmaschine oder dergleichen,
Fig. 22 eine schematische Ansicht eines erfindungsgemäßen Hammers (Abbildung oben mit einem, Abbildung Mitte mit zwei Schwingungsknoten, Abbildung unten mit Dämpfers),
Fig. 23 eine schematische Seitenansicht eines erfindungsgemäßen Autositzes (Abbildung oben) und eine schematische Schnittansicht der Sitzbefestigung (Abbildung unten) gemäß einer ersten Alternative,
Fig. 24 eine schematische Seitenansicht eines erfindungsgemäßen Autositzes (Abbildung oben) und eine Schnittansicht der Befestigung (Abbildung unten) gemäß einer zweiten Alternative,
Fig. 25 eine schematische Ansicht eines erfindungsgemäßen Messaufnehmers oder dergleichen,
Fig. 26 eine schematische Ansicht eines erfindungsgemäßen Maschinengestells,
Fig. 27 eine schematische Schnittansicht eines erfindungsgemäßen Antriebstrangs,
Fig. 28 eine schematische Ansicht einer dreiundzwanzigsten erfindungsgemäßen Ausführungsform mit drei Freiheitsgraden,
Fig. 29 eine schematische Ansicht einer vierundzwanzigsten erfindungsgemäßen Ausführungsform mit zwei schwingenden Elementen,
Fig. 30 eine schematische Ansicht einer fünfundzwanzigsten erfindungsgemäßen Ausführungsform mit Longitudinalschwingungen um einen Schwingungsknoten, in zwei unterschiedlichen Momentaufnahmen gezeigt (Abbildung links in Nullstellung, Abbildung rechts bei größerem Ausschlag),
Fig. 31 eine schematische Ansicht einer Radaufhängung mittels der fünfundzwanzigsten Ausführungsform,
Fig. 32 eine schematische Seitenansicht eines Fahrzeugsitzes insbesondere für einen Traktor,
Fig. 33a und 33b schematische Seitenansichten eines Fahrradsitzes.
Fig. 34 eine schematische Ansicht einer zwei- oder dreidimensional wirkenden erfindungsgemäßen Ausführungsform, die aufgrund ihrer flachen Bauweise z.B. als Werkzeughalter an einem Roboterhandling eingesetzt werden
Fig. 35 eine schematische Ansicht einer eindimensional wirkenden erfindungsgemäßen Ausführungsform, die aufgrund ihrer flachen Bauweise z.B. als Werkzeughalter an einer Lineareinheit eingesetzt werden kann.

### Lage von Schwingungsknoten:

Für einen stabförmigen Biegeschwinger ist die Lage der natürlichen Schwingungsknoten bei verschiedenen Schwingungsmoden beispielsweise angegeben im Lehrbuch H. Dresig, F. Holzweißig: Maschinendynamik. Springerverlag, 5. Auflage, 2004, Tabelle 5.7.

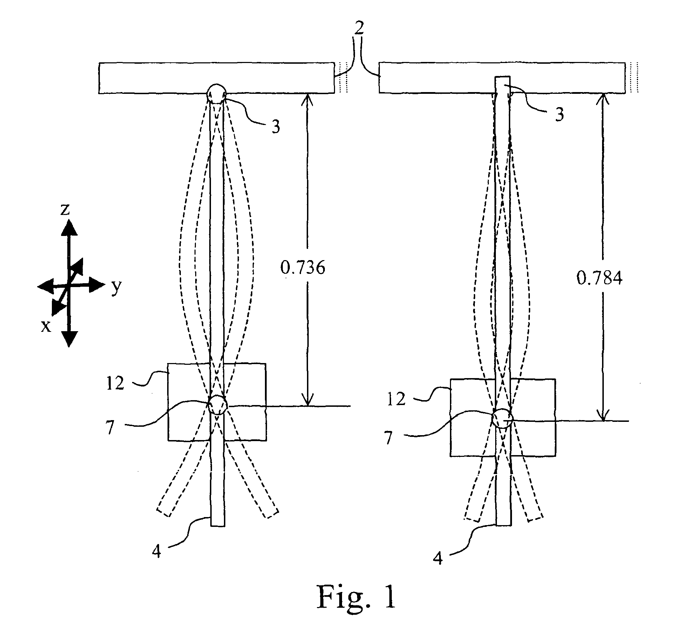

Für einseitige Befestigung an Gelenk oder einseitiger Einspannung liegen die natürlichen Schwingungsknoten bei einem Schwingungsmodus der ersten Harmonischen beim 0.736-fachen bzw. 0.784-fachen der freien Stablänge, siehe Fig. 1. Der Schwinger 4 ist in der linken Abbildung drehend gelagert, in der rechten fest eingespannt (Punkt 3). Viele Aufgabenstellungen lassen sich mit fester Einspannung konstruktiv einfacher lösen, siehe die unten aufgeführten Beispiele. Die Schwingungsform ist gestrichelt eingezeichnet. Der erste Punkt 7 ist der feststehende Schwingungsknoten der ersten Harmonischen und steht fest, mit oder ohne die im ersten Punkt drehbar gelagerte Masse 12 (freier Schwingungsknoten). Verlagert man die drehbare Befestigung der Masse leicht aus der Position des freien Schwingungsknotens heraus, so wandert der Schwingungsknoten mit, je nach Größe der Masse und Grad der Verlagerung. Man kann also durch die Masse den Schwingungsknoten etwas "verziehen". Die drehbare Befestigung braucht sich also nur in der Nähe des freien Schwingungsknotens zu befinden. Im folgenden wird zur Vereinfachung der Darstellung davon ausgegangen, daß sich die drehbare Befestigung genau im freien Schwingungsknoten Punkt befindet. Durch mitschwingende Zusatzgewichte (z.B. an Schwingungsbäuchen oder in deren Nähe) kann die Lage der freien Schwingungsknoten verschoben werden.

Erschüttert man die Halterung 2 mit einem Stoß in x- oder y-Richtung (Figur 1), so wird der Schwinger zu Schwingungen um den ersten Punkt angeregt.

Die durch die Stöße oder Vibration eingebrachte Energie wird zumindest teilweise in Schwingungsenergie des Schwingers umgewandelt, wobei der erste Punkt in Ruhe bleibt. Dabei ändert sich im ersten Punkt die Orientierung des Schwingers, relativ zur Masse. Die Position der Masse bleibt unter idealen Bedingungen in Ruhe, die Masse behält unter idealen Bedingungen auch ihre Orientierung aufgrund ihrer Trägheit. Der Schwinger gibt durch innere Reibung oder durch zusätzlich angebrachte, nicht gezeichnete Dämpfung, die Energie allmählich wieder ab, ohne daß sich die Position des ersten Punktes verändert (der Impuls-Unterschied zwischen je zwei Schwingungen ist gering, außerdem ist das Vorzeichen aufeinander folgender Impulsunterschiede alternierend). Vor dem Abklingen eingebrachte, weitere Stöße können je nach Phasenlage die Schwingung weiter vergrößern oder verringern, wobei auch dabei die Position des ersten Punktes erhalten bleibt.

Welcher von mehreren möglichen Schwingungsmoden eingenommen wird, wird zwar grundsätzlich durch die anregende Bewegung ("Schock") beeinflußt, ist jedoch wesentlich durch die Anwesenheit von Massen bei entprechenden Schwingungsknoten bestimmt.

### Statische Orientierung:

Nun ist unter realen Verhältnissen dafür zu sorgen, daß die Orientierung der Masse nicht wegdriftet. Dies kann je nach Anwendung durch konstruktive Mittel erreicht werden, wie aus den unten angegebenen Anwendungsbeispielen ersichtlich.

### Unterdrücken der Grundschwingung:

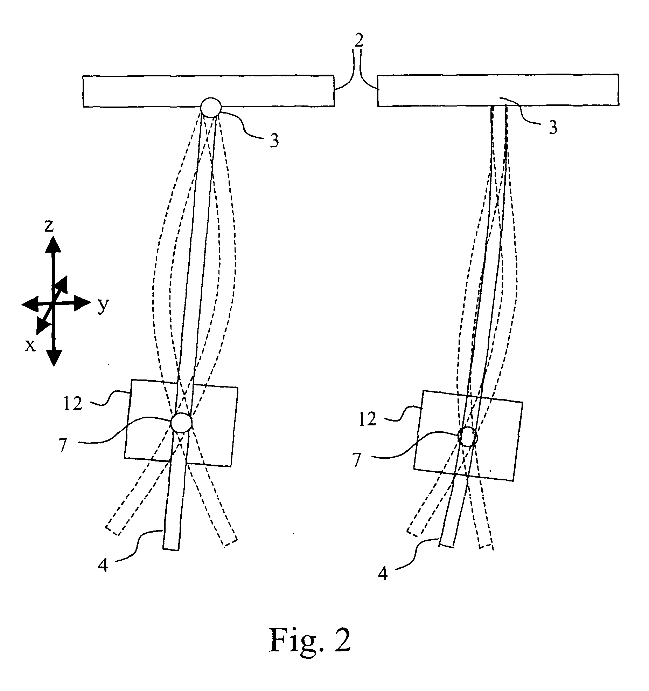

Weiterhin wird unter realen Verhältnissen die Schwingung um Schwingungsknoten von einer Grundschwingung überlagert, siehe Fig. 2, links bei drehender Einspannung eine unerwünschte starre Pendelbewegung, rechts bei fester Einspannung eine unerwünschte Biegeschwingung, jeweils überlagert durch die erwünschte Schwingung um den ersten Punkt nach Fig. 1.

Zur Unterdrückung der Grundschwingung werden erfindungsgemäß folgende Lösungen angeboten.
1. Anbringen einer Dämpfungseinrichtung, auch dämpfendes Glied genannt, die am Schwinger im ersten Punkt oder an der Masse befestigt ist, mit einer Wirkungskomponente, die in der Bewegungsrichtung der Verbindungsstelle bei Grundschwingung liegt.
2. Optional zusätzliches Anbringen eines klassischen Tilgers am ersten Punkt, der auf die Grundfrequenz abgestimmt ist.

Durch Anbringen eines Tilgers wird die Grundschwingung wirksam unterdrückt. Der Tilger ohne Dämpfungseinrichtung muß jedoch nach Erfahrung des Anmelders sorgfältigst auf die Grundfrequenz abgestimmt sein, sonst ergeben sich Interferenzen, die nach mehreren Schwingperioden sogar zu einem zeitweiligen Aufschaukeln führen.

Erfindungsgemäß wird eine Dämpfungseinrichtung eingesetzt. Erfindungsgemäß wird das dämpfende Glied einerseits direkt oder indirekt am ersten Punkt angesetzt, andererseits an der schockbehafteten Baueinheit 2. Wider Erwarten gelingt es nach Erfahrung des Anmelders mit einfachen Mitteln und in unkritischer Dimensionierung, die Dämpfung so einzustellen, daß sich die Schocks einerseits nicht merklich auf den ersten Punkt übertragen, und daß andererseits die Grundschwingung wirksam gedämpft wird.

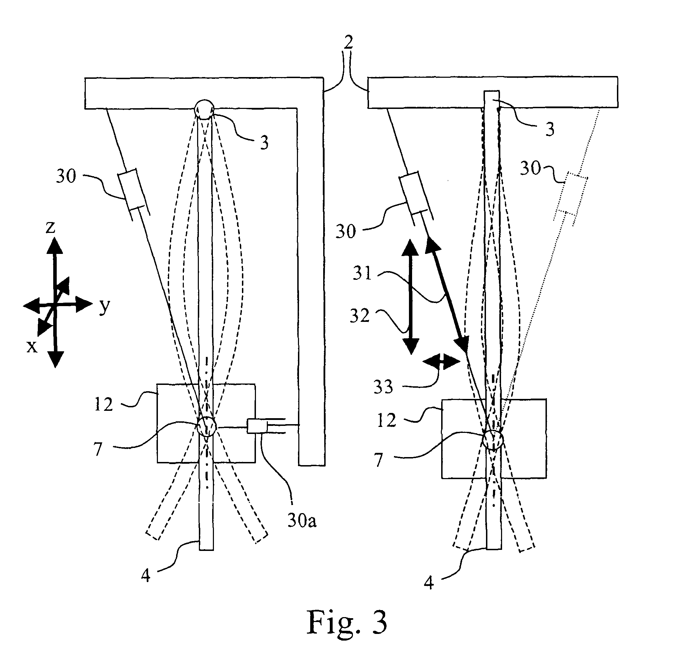

Fig. 3 zeigt für eine mit Fig. 1 und 2 ähnliche Anordnung beispielhaft in schematischer Form die Anbringung eines dämpfenden Elements 30. Es ist einerseits am ersten Punkt 7 und andererseits an der schockbehafteten Baueinheit 2 befestigt. Durch die schräge Form der Anbringung wird sichergestellt, daß das dämpfende Glied 30, in Richtung 31 wirksam, neben einer Wirkungskomponente in Richtung 32 (hier z-Richtung) eine Wirkungskomponente in Richtung 33 besitzt (hier: y-Richtung), letzgenannte Richtung ist die Richtung der Bewegung des ersten Punkts bei Grundschwingung. Je nach Aufgabenstellung kann das dämpfende Glied auch zusätzlich oder ausschließlich in der gewünschten Richtung wirkend realisiert werden; in Fig. 3 ist mit 30a ein direkt in dieser Richtung wirkendes dämpfendes Glied eingezeichnet, siehe auch die unten ausgeführten Anwendungsbeispiele.

In der in Fig. 3 gezeichneten Anordnung genügt für Schocks in y-Richtung ein dämpfendes Element wie gezeichnet. Zur Symmetrierung kann man zwei symmetrische Elemente anbringen (in Fig. 3 rechts, zweites Element gestrichelt gezeichnet); zur Dämpfung von Schocks auch in x-Richtung kann man einen weiteren, nicht gezeichneten Dämpfer einsetzen, der schräg zur Zeichenebene geneigt ist. Anstelle des gezeichneten Dämpfers kann man einen voluminös realisierten Dämpfer aus einem plastisch nachgebendem Stoff verwenden (vgl. Beispiel Fig. 19A; Erläuterung weiter unten).

### Ausgestaltungen

### Schwingeinrichtung:

Als Schwinger kommen elastische Elemente in Gestaltungen beliebiger bekannter Arten in Frage.

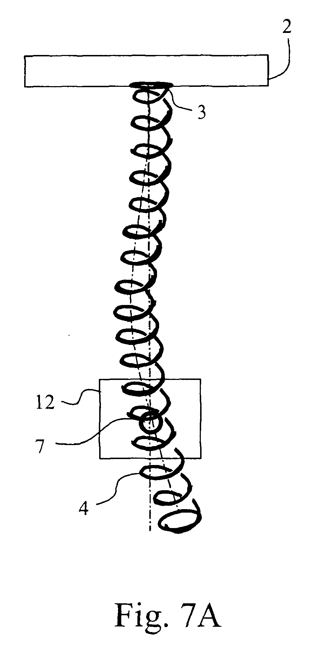

Zur Erhöhung der Nachgiebigkeit können z.B. Stäbe durch Schraubenfedern (Zylinderform) oder Spiralfeldern (Schneckenform) ersetzt werden, siehe Beispiel Fig. 7A. Dadurch gelingt eine Verkürzung des Schwingers bei gleicher Nachgiebigkeit bzw. eine Erhöhung der Nachgiebigkeit bei gleicher Länge, ohne den Drahtdurchmesser verringern zu müssen.

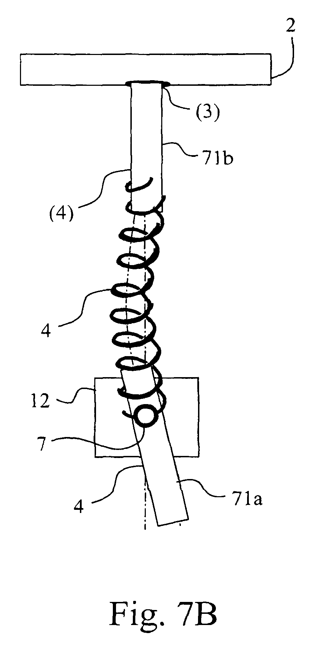

Im Beispiel Fig. 7B besteht der Schwinger 4 aus einer Schraubenfeder und einem damit verbundenen starren Stab 71a. Der starre Stab 71b ist bei drehbarer Lagerung im Punkt 3 Teil des Schwingers, bei fester Einspannung nicht (dann liegt der Punkt 3 weiter unten am Anfang der Feder).

Bei den Schwingern kann es sich um Schwingplatten handeln, wobei sich die ersten Punkte an den Knotenlinien von Chladnischen Klangfiguren befinden.

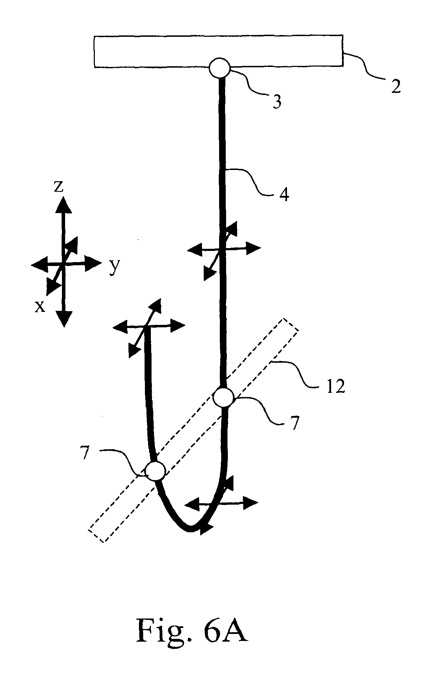

Bei mehreren Schwingungsknoten (mehrere erste Punkte), auch nur eines Schwingers, kann die Masse an diesen Punkten, also an mehreren Punkten, drehbar befestigt sein; dies ist eine der konstruktiven Methoden, das Wegdriften der Orientierung der Masse 12 relativ zur Halterung 2 zu verhindern, ohne dazu mehrere Schwinger einsetzen zu müssen. Bei dem Beispiel von Fig. 6A reichen die beiden Knoten aus, um einen Stab 12 statisch bestimmt zu stabilisieren.

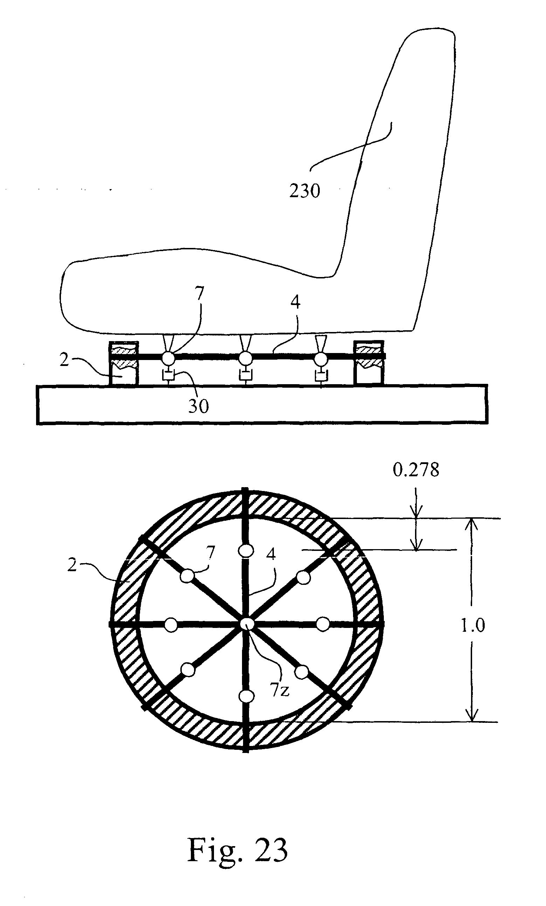

Konstruktiv können sich auch mehrere Schwinger einen gemeinsamen ersten Punkt teilen, siehe z.B. den zentralen Punkt 7z in Fig. 23.

In den Beispielen schwingen die Schwinger frei; sie können jedoch grundsätzlich schwingfähig in zumindest teilweise elastische Materialien eingebettet sein.

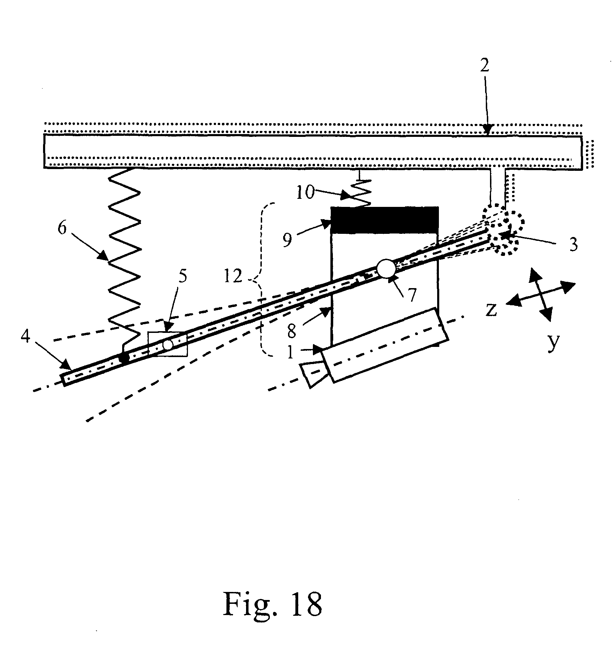

Es sind aus mehreren einzelnen schwingfähigen Elementen zusammengesetzte Schwinger möglich. Ein Beispiel mit Federstab und Schraubenfeder findet sich in Fig. 18:
Eine Kamera 1 soll an einem Bauteil 2 befestigt werden, das hochfrequent vibriert und/oder abrupten Beschleunigungen ausgesetzt ist, wie durch die punktierten Linien angedeutet. Das Koordinatensystem sei mit z entlang der optischen Achse, x und y rechtwinkig dazu (x nicht gezeichnet, rechtwinklig zu y). Stöße entlang der optischen Achse führen nur zu geringfügigen Veränderungen im Bild, gravierend sind jedoch Stoßkomponenten in x- und y-Richtung. Letztere werden durch die Anordnung von Fig. 18 ausgeglichen.

Stöße im Angriffspunkt 3, in x- oder y-Richtung, führen zu Schwingungen um den ersten Punkt 7.

Der Schwinger ist am Angriffspunkt 3 drehbar und reibungsarm befestigt und besteht aus dem Schwingstab 4, optional mit einer oder mehreren am Schwingstab angebrachten Hilfsmassen 5 und einer Haltefeder 6. Schwinger und Masse sind gegeneinander drehbar im ersten Punkt 7. Die Masse 12 besteht in Fig. 18 aus Kamera 1 (mit Objektiv), Halterung 8 und Gegengewicht 9.

Die Haltefeder 6 ist zunächst dazu da, den Stab vor dem Herunterfallen zu hindern. Sie ist Teil des schwingenden Systems. Wenn die Elastizitäten so gewählt werden, daß die Haltefeder in Relation zum Schwinger wesentlich weicher ist, funktioniert die Anordnung nach Fig. 18 für Stöße in x- und y-Richtung gleichermassen, auch mit nur einer Haltefeder. Diese Bedingung ist sowieso günstig, da das Schwingverhalten dann nicht über die Haltefeder durch Schocks beeinflußt wird. Natürlich kann man auch zur Symmetrierung der Dynamik mehrere Haltefedern um den Schwinger herum anordnen, z.B. auch in Form einer runden Membran. Eine weich dimensionierte Rückstellfeder 10 stabilisiert die Orientierung der Kamera. Die Orientierung geschieht jedoch bevorzugt durch parallele Anordnungen von Anordnungen nach Fig. 18.

### Einspannung an Baueinheit:

Die Schwingungseinrichtung kann an der Baueinheit drehbar (Fig. 9, 12A, 13, 18) oder fest eingespannt sein.

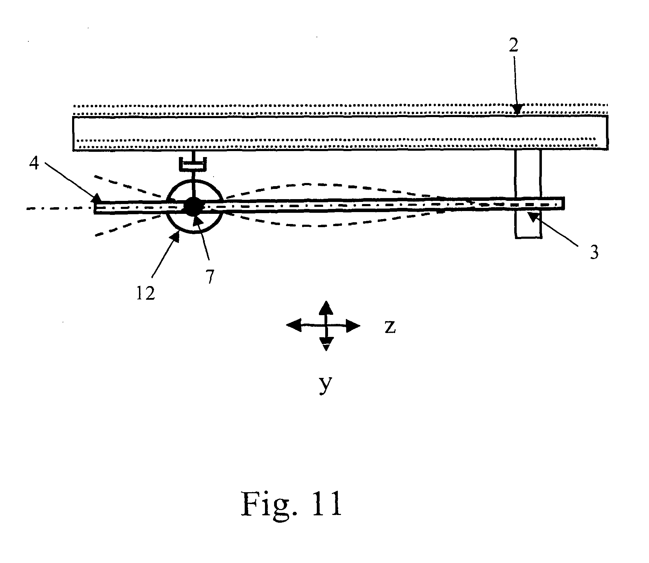

In Fig. 9 beispielsweise findet die Schockeinwirkung an einem Gelenk 3 statt. Fig. 11 zeigt eine Anordnung mit fest eingespanntem Schwinger, mit Absorption in x- und y-Richtung. Der Schwingstab 4 ist am Angriffspunkt 3 fest eingespannt. Die Masse 12 ist rotationssymmetrisch, es bedarf daher keiner konstruktiven Mittel zur Verhinderung der Verdrehung um den ersten Punkt 7.

### Drehbare Befestigung:

An den ersten Punkten können die drehbaren Befestigungen in jeder bekannten Art von Gelenken realisiert sein, beispielsweise als Lager, als Schneide oder als auf Biegung und/oder Torsion beanspruchtes Element wie Draht, Zapfen, Stab, Schraubenfeder, Spiralfeder, kurze Blattfeder, gekreuzte Blattfedern.

### Dämpfungseinrichtung:

Die dämpfenden Elemente sind in den Figuren symbolisch gezeichnet und können real in beliebiger bekannter Weise realisiert sein, z.B. als hydraulischer oder pneumatischer Stoßdämpfer, als Reibungsdämpfer, als Dämpfungskörper, in Form von Dämm-Material oder als auf Zug/Druck/Scherung beanspruchtes, eventuell elastisch vorgespanntes, plastisch nachgiebiges Material (zu Letzterem vgl. Beispiel Fig. 19A). Wesentlich ist das Vorhandensein einer Wirkrichtungskomponente, die in der Bewegungsrichtung der Verbindungsstelle bei Grundschwingung liegt. Als Dämpfungskörper eignet sich beispielsweise eine Schaumstoff, der Schwingungen dämpft.

### Hilfsmassen:

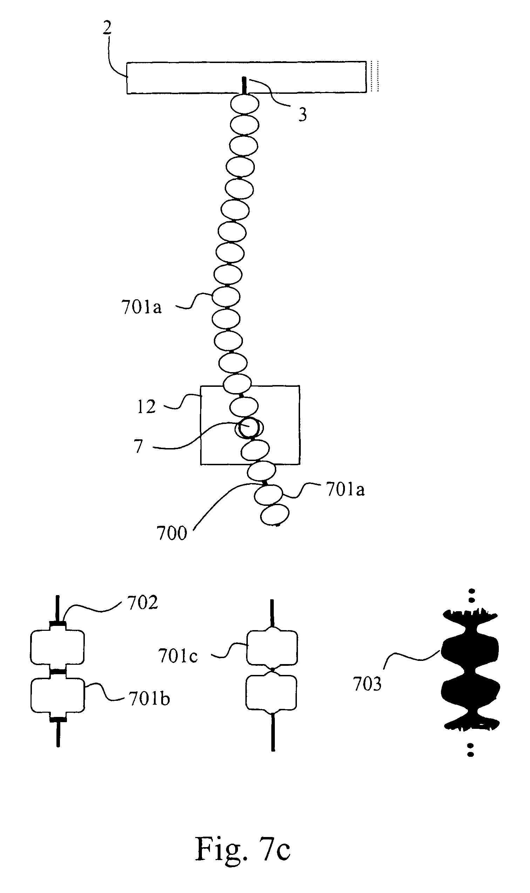

Zur Umsetzung der Schockenergie in Schwingungsenergie werden ausreichend schwingende Masse und Amplitude benötigt. Um dies insbesondere bei höheren Harmonischen oder kleiner Bauweise zu erreichen, können erfindungsgemäß anstelle einzelner Hilfsmassen auch Anordnungen nach Fig. 7c eingesetzt werden: auf einem verhältnismäßig dünnen, elastischen Kernmaterial 700 werden wie auf einer Perlenschnur Hilfsmassen aufgefädelt; 701a..701c sind Beispiele. Kernmaterial 700 und Hilfskörper 701a bilden zusammen den Schwinger 4. Bei 701a und 701c (Fig. 7c unten Mitte) berühren sich die Hilfsmassen punktuell, so daß die Biegung des Schwingers nicht behindert wird. Bei 701b (Fig. 7c unten links) liegt zwischen den sich flächig berührenden Hilfsmassen eine dämpfende Scheibe 702 für schnelleres Abklingen der (gewollten) Schwingungen. Auch wenn die Hilfsmassen auf dem Kernmaterial etwas Spiel haben, entsteht durch dieses Spiel eine gewisse Dämpfung. Im Beispiel 703 (Fig. 7c unten rechts) ist der Schwinger 4 einstückig und besitzt deutliche, regelmäßige oder unregelmäßige Einkerbungen zur Erhöhung der Nachgiebigkeit (bevorzugt an Stellen starker Krümmung beim Schwingen) zwischen dickeren Abschnitten.

Einen ähnlichen Effekt erhält man erfindungsgemäß durch Umwickeln des Kernmaterials mit einem Draht, wie prinzipiell von Klaviersaiten bekannt. Soll insgesamt Gewicht eingespart werden, so wird man größere Hilfsmassen bzw. Drahtlagen an den Bereichen der Schwingungsbäuche platzieren.

### Zusatzdämpfer:

Um ein nicht zu langes Ausschwingen des Schwingers der an sich gewünschten Schwingungen um den ersten Punkt zu erzwingen, kann man, vorzugsweise an den Schwingungsbäuchen, freitragende Dämpfungsmittel anbringen, wie Behälter, die mit Granulat gefüllt sind oder Umhüllungen/Einlagerungen mit plastisch dämpfendem Material. Die gleiche Funktion haben die oben erwähnten dämpfenden Scheiben 702 in Fig. 7c (unten links).

### Tilger:

Ein klassischer Schwingungstilger tilgt nur für eine bestimmte Resonanzfreqenz. Bei der hier präsentierten Anordnung ist es gerade umgekehrt: es werden alle Frequenzen bis auf (sehr niedere und) die Grundfrequenz des Schwingers getilgt. Erfindungsgemäß wird die Masse der bisher beschriebenen Anordnungen mit einem zusätzlichen Feder-Masse-System als Tilger ausgestattet. Für das Beispiel von Fig. 9 wird die Anordnung in Fig. 13 vorgeschlagen; Grundschwingungen in x-oder y-Richtung werden durch den zusätzlichen Schwinger 21 getilgt, der als federndes Pendel realisiert ist. Der mit Schraubenfeder versehene Tilger 22 wirkt in erster Linie in y-Richtung, ein in x-Richtung wirkender Tilger ist nicht gezeichnet. Vorzugsweise wird ein symmetrisch ringförmig um den Tischfuß angeordneter, federnd am Tischfuß befestigter Tilger eingesetzt, z.B. mit einer Ringmembran.

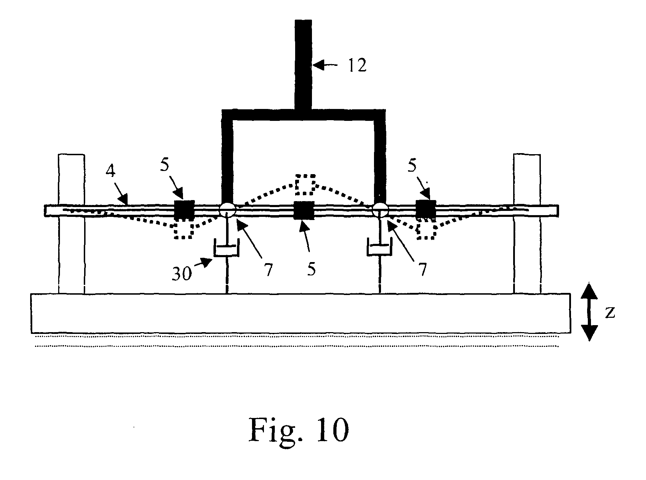

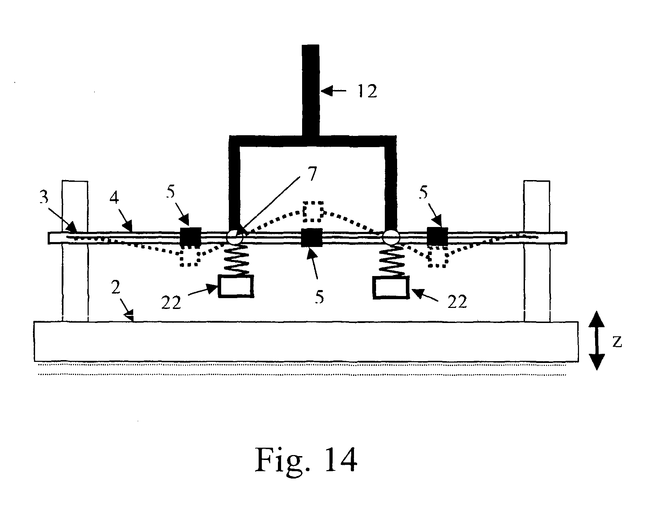

Fig. 14 zeigt eine dementprechende Erweiterung der Anordnung von Fig. 10 um zwei Tilger 22, zur Unterdrückung von Grundschwingungen des Schwingstabes 4. Die dämpfenden Elemente nach Fig. 10 sind bevorzugt zusätzlich vorhanden (nicht gezeichnet).

Besonders vorteilhaft ist die Kombination von Dämpfungseinrichtung und Tilger: Auch bei geringfügig verstimmtem Tilger werden einerseits die ersten Grund-Schwingungsperioden durch den Tilger mit großer Kraft unterdrückt, andererseits tritt die oben beschriebene Interferenzerscheinung nicht zutage, da nach einigen Schwingungsperioden die Schwingung durch die Dämpfung ohnehin unterdrückt ist. Dämpfung der Grundschwingung des Schwingers und eine Dämpfung des Tilgers sind aufeinander abgestimmt.

### Zwei Freiheitsgrade:

Bei Unsymmetrien des Schwingers ist die Lage der Schwingungsknoten grundsätzlich abhängig von der Schwingungsrichtung. Dies sei am Beispiel von gekrümmten Stäben, wie sie in einigen der unten aufgeführten Beispiele zum Einsatz kommen, erläutert. Es sind Fälle realisierbar, wo zumindest ein Schwingungsknoten zumindest näherungsweise unabhängig von der Orientierung der Schwingung ist. Bei nur näherungsweisem Zusammenfallen der Schwingungsknoten wird durch den oben erläuterten Effekt des "Verziehens" durch die Masse 12 ein gemeinsamer Schwingungsknoten erzwungen.

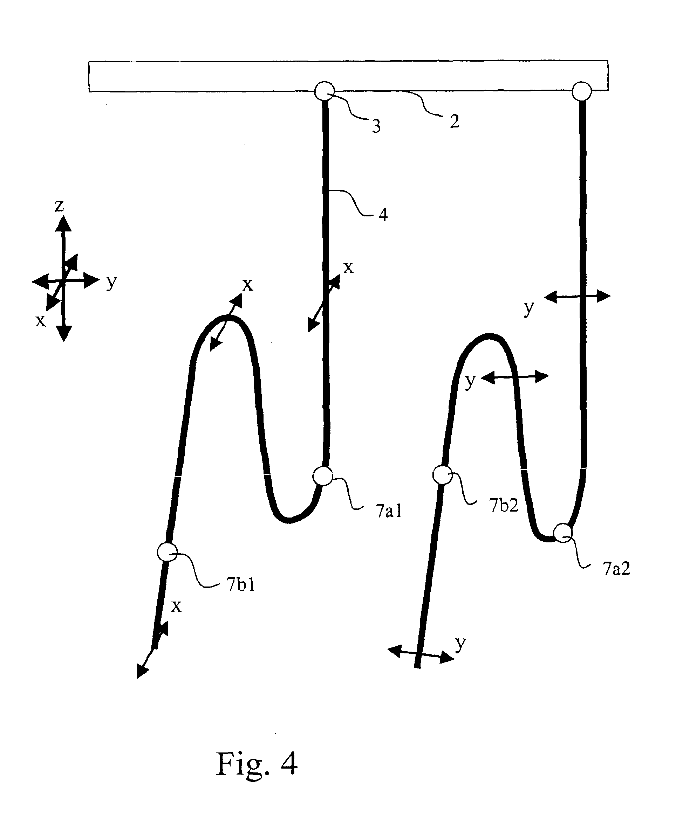

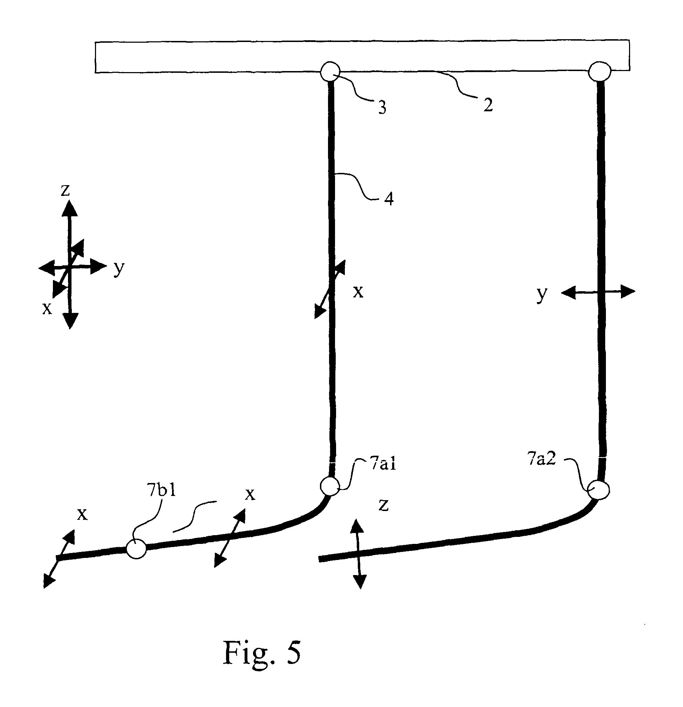

Fig. 4 zeigt die Lage der Schwingungsknoten eines zweifach gekrümmten Stabes, für Schwingungen in x-Richtung (links) und y-Richtung (rechts). Die ersten Punkte 7a1 und 7a2 liegen nah beisammen, die ersten Punkte 7b1 und 7b2 weiter auseinander. Fig. 5 zeigt die Lage der Schwingungsknoten eines einfach gekrümmten Stabes, für Schwingungen in x-Richtung (links) und y-Richtung (rechts). Die ersten Punkte 7a1 und 7a2 liegen nah beisammen, für den ersten Punkt 7b1 gibt es keine Entprechung 7b2. Fig. 6A zeigt mit einem gekrümmten Stab ein Beispiel für ein unsymmetrisches Objekt mit gut richtungsunabhängiger Lage der Schwingungsknoten. Bei mehrdimensionalen Schwingungsproblemen werden vorzugsweise solche Knoten verwendet, die dimensionsbezogen nah beisammen liegen: über die Masse werden sie dann an die gleiche Stelle "verzogen".

### Drei Freiheitsgrade:

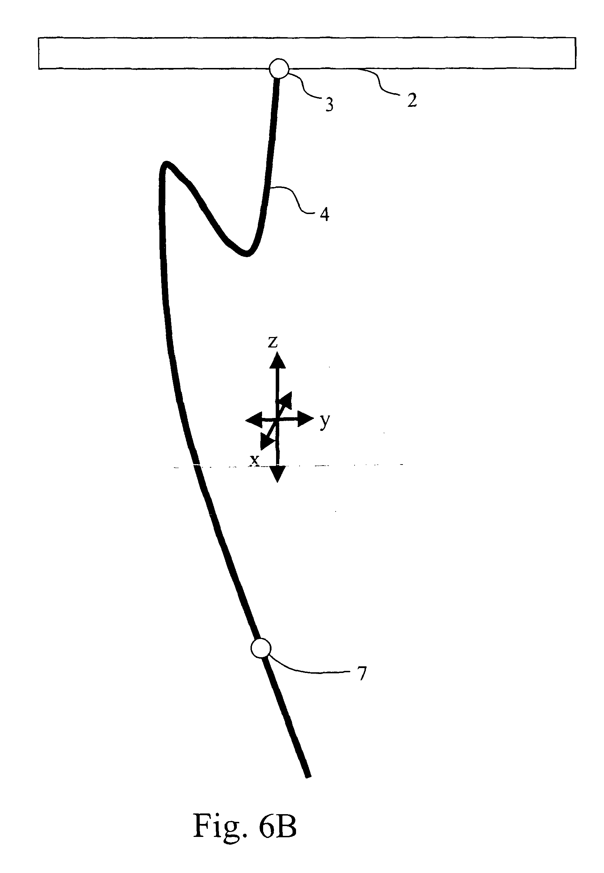

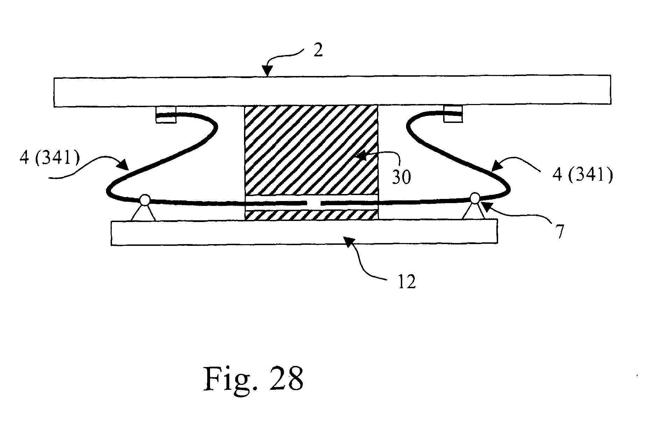

Fig. 6B zeigt eine Schwingergeometrie, bei der die Schwingungsknoten 7 für alle drei Koordinaten nahe beisammen liegen. Mit solchen Geometrien können erfindungsgemäße Anordnungen realisiert werden, die in allen drei Koordinatenrichtungen wirksam sind. Ein weiteres Beispiel findet sich in Fig. 28.

### Torsions-Absorption mit Transversalschwinger:

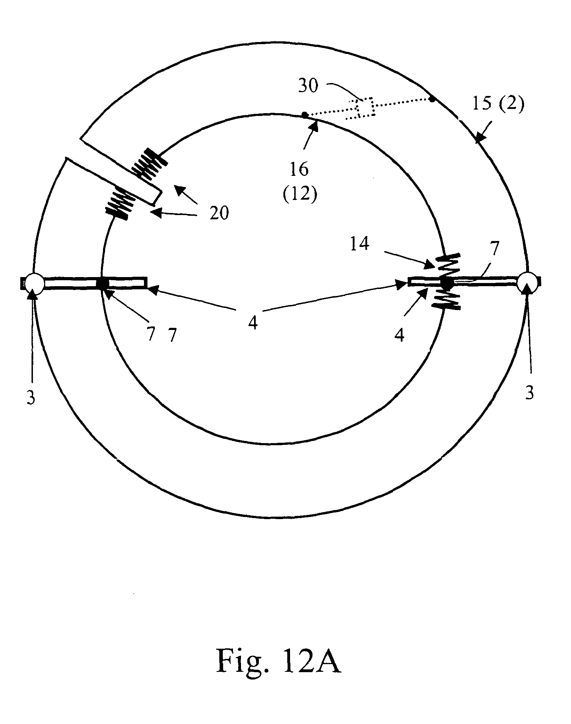

Eine grundsätzliche Lösung zur Verwendung von transversal schwingenden Elementen zur Absorption rotatorischer Schocks, wie sie z.B. im Antriebsstrang von Automobilen auftreten oder bei Bearbeitungsmaschinen ("rupfen") oder Schraubautomaten, wird mit Fig. 12A aufgezeigt. Ein Drehmoment sei von einem Bauteil 15 auf ein Bauteil 16 zu übertragen. Die Bauteile 15 und 16 sind z.B. die Massen eines Zweimassenschwungrades oder die betreffenden Teile einer torsionsgedämpften Kupplungs-Mitnehmerscheibe mit daran befestigten Massen. In Analogie zu den bisherigen Figuren fungiert hier Bauteil 15 als Bauteil 2, Bauteil 16 mit den daran befestigten Teilen als Masse 12. Die Kraftübertragung im stationären Zustand oder bei niederfrequenten Drehmomentänderungen findet in bekannter Weise federnd statt, wie über die Druckfedern 20 symbolisiert. Zur Absorption abrupter und hochfrequenter Drehmomentänderungen befinden sich am Umfang erfindungsgemäße Anordnungen, bestehend aus einem Schwinger 4, ggf. mit Hilfsmasse 5 (nicht gezeichnet), drehend gelagert am Einbringpunkt 3, bei rotativen Schocks um den ersten Punkt 7 schwingend. Am ersten Punkt kann die Kraftübertragung auf das Bauteil 16 direkt über ein Gelenk im ersten Punkt 7 stattfinden (Fig. 12A links), oder indirekt, abgefedert über eine Kraftübertragungsfeder 14, die einerseits am ersten Punkt 7 mit dem Schwinger und andererseits mit Bauteil 16 verbunden ist (Fig. 12A rechts). Am linken Schwinger wird auf eine Feder 14 verzichtet; bevorzugt, aber nicht notwendigerweise wird man den Aufbau symmetrisch realisieren. Über die Dimensionierung der Federkonstanten und der Elastizität des Schwingstabes geschieht die Abgrenzung zwischen konventionell abzufangenden niederfrequenten und erfindungsgemäß zu absorbierenden, hochfrequenten Drehmomentänderungen. Falls erforderlich eingebrachte dämpfende Elemente 30 (teilweise nicht gezeichnet) haben eine tangentiale Komponente.

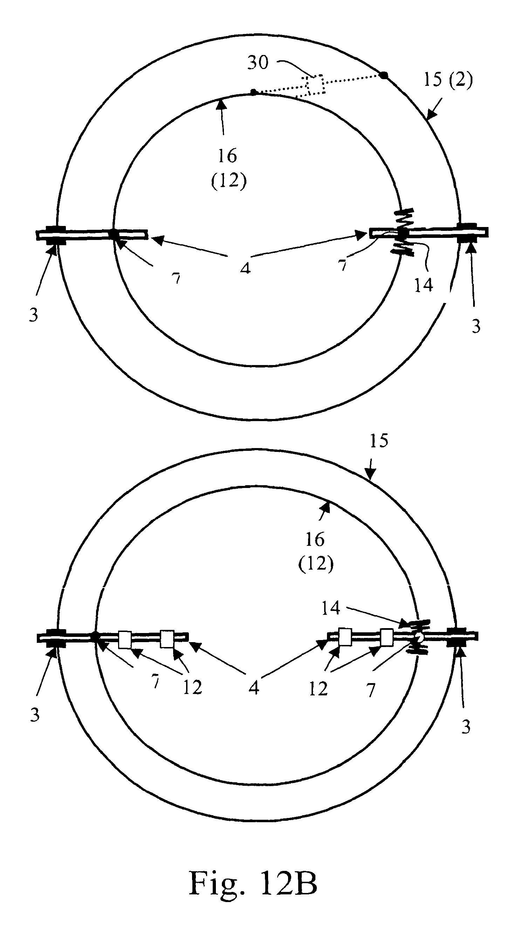

Fig. 12B zeigt zwei Beispiele für einen entprechenden Lösungsansatz bei fester Einspannung des Schwingstabs 4, oben für die Position des ersten Punkts wie in Fig. 1 links, unten für einen höheren Schwingungsmodus, wobei an den freien natürlichen Knotenpunkten weitere Massen 12 angebracht sind, um die Tendenz zur Schwingung im gewünschten Modus zu unterstützen. Natürliche Schwingungsknoten liegen bei diesem Modus bei fester einseitiger Einspannung z.B. beim 0,35-fachen, 0,64-fachen und 0,91-fachen der Stablänge, s. og. Lehrbuch-Tabelle. Am ersten Knoten befindet sich der erste Punkt, bei den beiden restlichen befinden sich zusätzliche Massen 12. Der fest eingespannte Schwingstab nimmt am ersten Punkt 7 mit drehbarer Lagerung das Bauteil 16 mit, optional über den Umweg einer Feder 14. Am linken Schockabsorber in Fig. 12B ist die direkte Kraftübertragung gezeichnet, ohne Feder 14.

Abrupte Drehmomentstöße werden vom Schwingstab aufgenommen, ohne auf das Bauteil 16 übertragen zu werden. Natürlich werden auch hier bevorzugt mehrere solche Schockabsorber-Anordnungen am Umfang realisiert. Das Bauteil 16 kann als gemeinsame Masse für alle Schockabsorber wirken. Aufgrund der festen Einspannung der Schwingstäbe kann die in Fig. 12A mit den Federn 20 symbolisierte weiche Drehmomentübertragung grundsätzlich entfallen. Ähnlich wie in Fig. 9 wird man durch eine in Nähe des Angriffspunktes dickere und am frei schwingenden Ende dünnere Formgebung (kontinuierlicher Übergang) einerseits eine gute Kraftübertragung und andererseits eine nicht zu hohe Resonanzfrequenz anstreben.

Im ersten Punkt 7 drehen sich Schwingstab 4 und Masse 16 lokal gegeneinander.

### Torsions-Absorption mit Torsionsschwinger:

Zur Absorption rotatorischer Schocks können mit der erfindungsgemäßen Anordnung auch Torsionsschwinger eingesetzt werden.

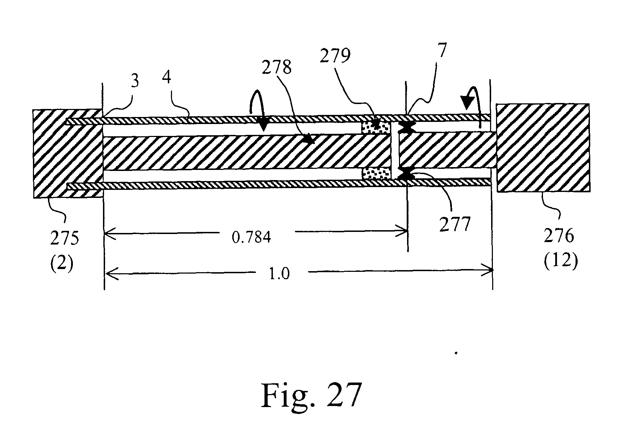

Fig. 27 zeigt eine erfindungsgemäße Anordnung zur Absorption von Torsionsschwingungen und Torsions-Schocks, mit Antriebswelle 275 und Abtriebswelle 276. Dazwischen befindet sich ein Rohr als Torsions-Schwinger 4, die Abtriebswelle (mit den damit verbundenen Bauelementen) fungiert als Masse. Am Torsions-Schwingungsknoten 7 ist das Rohr punktuell oder ringförmig an der Abtriebswelle befestigt (Befestigung 277), so daß sich die Torsionsschwingungen (Pfeile) um die Masse herum drehen können (lokale Drehung um radiale Achsen). Ein plastisch verformbares Material 279 befindet sich in der Nähe des Schwingungsknotens zwischen dem Schwinger 4 und einer Verlängerung 278 der Antriebswelle 275. Auch ein Reibungsdämpfer kann an dieser Stelle eingebracht werden.

In der Zeichnung befindet sich die Befestigung 277 innerhalb des Rohres (Abtriebswelle innerhalb Rohr), sie kann sich ebensogut außen befinden (Abtriebswelle außerhalb Rohr), oder innen und außen. Natürlich kann auch umgekehrt der Schwinger als Vollmaterial und der Abtrieb als den Schwinger umgebendes Rohr realisiert sein.

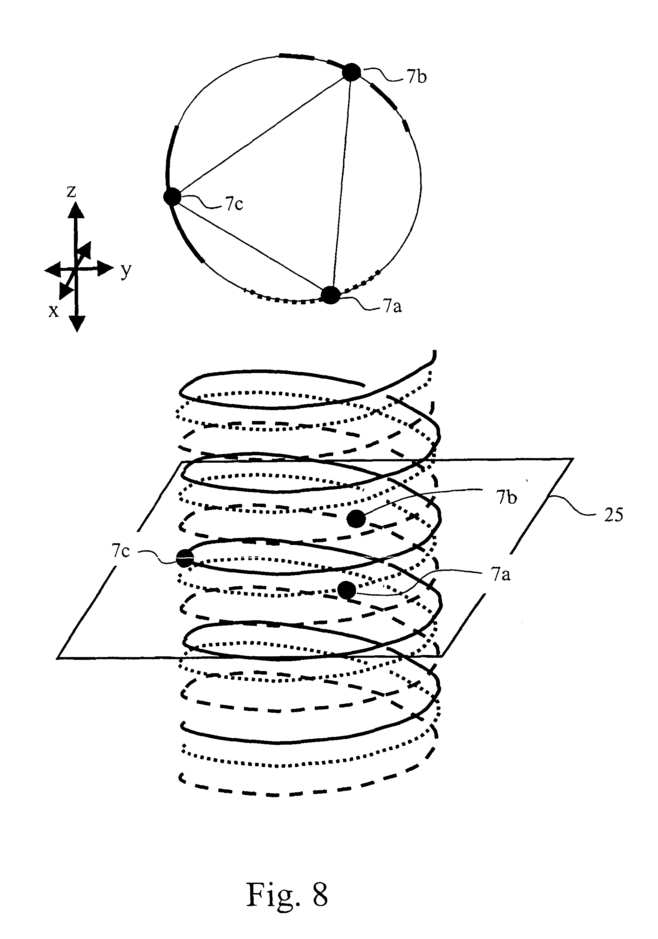

Der Schwinger kann vorteilhaft anstelle eines Rohres durch mehrere parallel angeordnete Stäbe wie in Fig. 19A realisiert sein. Er kann auch durch eine oder mehrere Schraubenfedern ersetzt werden, bevorzugt ineinander gedrehte Schraubenfedern nach Fig. 8. Durch solche Parallelschaltungen wird die Steifigkeit der einzelnen Elemente verringert, bei trotzdem großer statischer Belastbarkeit infolge Parallelschaltung.

### Longitudinalschwinger:

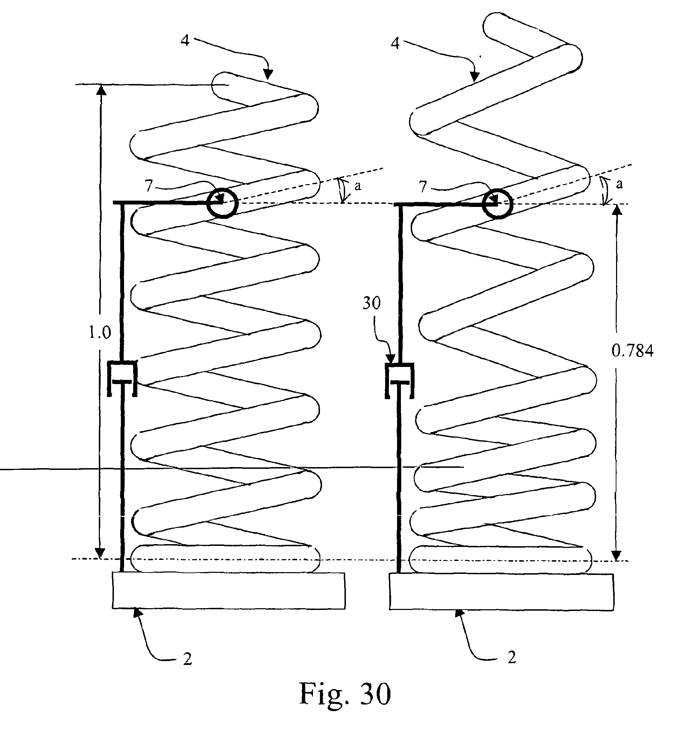

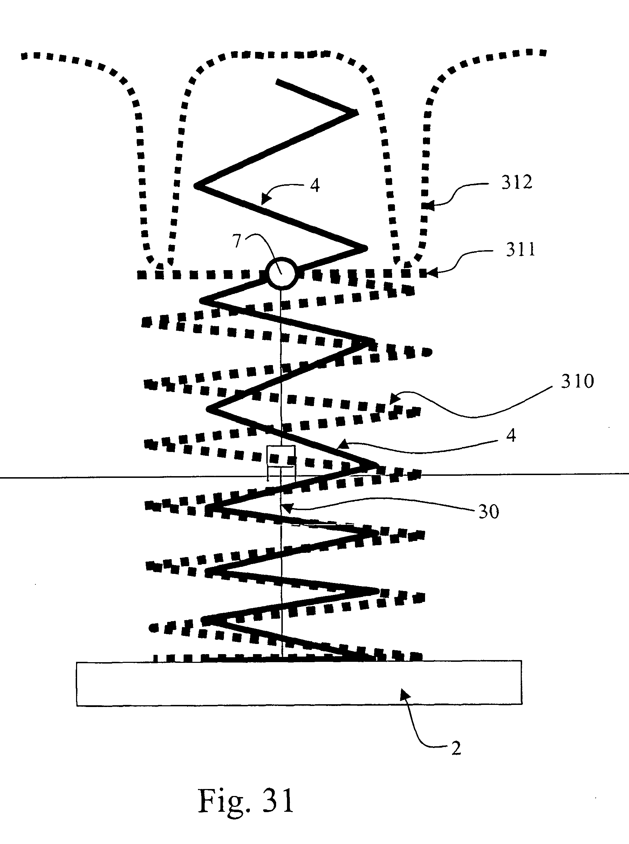

Auch Longitudinalschwinger können als erfindungsgemäße Anordnung eingesetzt werden. Fig. 30 zeigt ein solches Beispiel mit Longitudinalschwingungen. Eine Schraubenfeder ist nebeneinander in verschiedenem Schwingungszustand gezeichnet, wobei ein Schwingungsknoten im ersten Punkt 7 besteht. Der Punkt 7 ist stillstehend, der Schwinger dreht sich im Punkt 7 lokal um den Punkt 7, erkennbar an dem links und rechts unterschiedlichen Winkel a. Ein Anwendungsbeispiel dafür ist eine Radaufhängung nach Fig. 31, siehe unten.

Ein Longitudinalschwinger nach Fig. 30 kann auch gleichzeitig als Transversalschwinger nach Fig. 7A eingesetzt werden. Damit sind Systeme, die in allen drei Koordinatenrichtungen wirken, realisierbar.

### Parallel- und Hintereinanderschaltung:

Parallel- und Hintereinanderschaltung erfindungsgemäßer Anordnungen sind möglich.

Insbesondere kann durch Parallelschaltungen von Schwingern eine statisch bestimmte Position und Orientierung der Masse ermöglicht werden.

Ein erfindungsgemäßer Ansatz zur Verflachung der Grundfrequenz-Resonanzkurve ist die Parallelschaltung mehrerer erfindungsgemäßer Anordnungen mit unterschiedlicher Resonanzfrequenz, wirksam für die verschiedenen Schwinger bei gleicher oder unterschiedlicher Harmonischer.

Eine Parallelschaltung ist besonders praktisch, wenn ohnehin mehrere solche Einrichtungen parallelzuschalten sind. Ein Beispiel für eine Parallelschaltung zeigt Fig. 8, mit drei ineinander gedrehten Schraubenfedern (durchgehend, gestrichelt bzw. gepunktet gezeichnet), und mit den drei ersten Punkten 7a, 7b, 7c, die sich auf einer gemeinsamen Platte 25 befinden, die als Masse dient oder an der die Masse befestigt ist. Die Position und Orientierung der Platte und damit der Masse ist über die drei Punkte bestimmt.

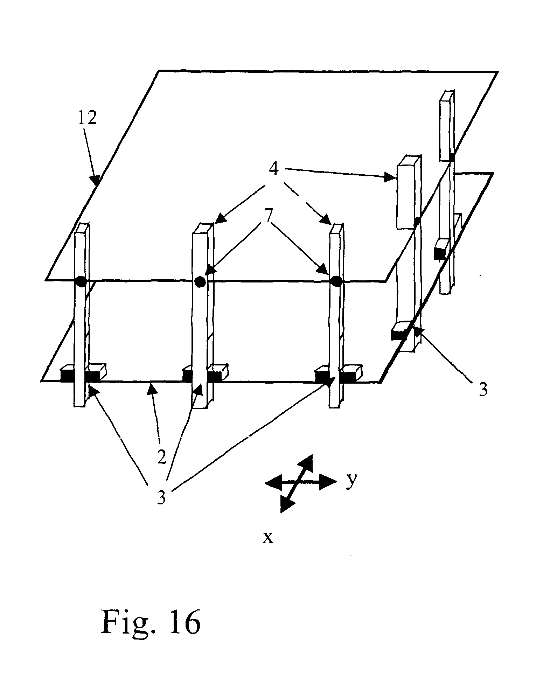

Fig. 16 zeigt eine Parallelschaltung mit Schwingstäben unterschiedlicher Dicke, eingesetzt zur Schockabsorption in x-und y-Richtung. Die Schwingstäbe haben abhängig von ihrer Dicke eine entsprechende Resonanzfrequenz.

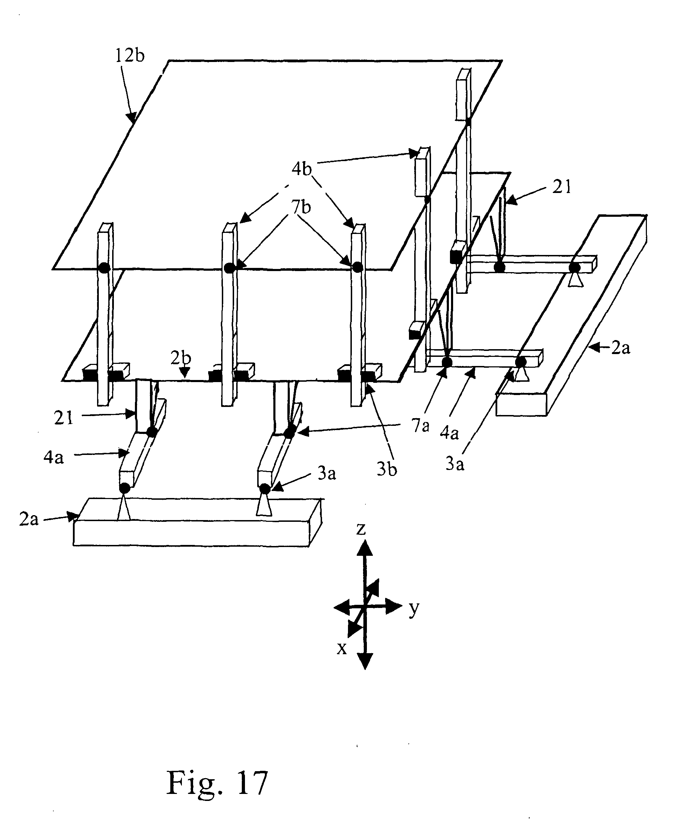

Fig. 17 zeigt die Hintereinanderschaltung zweier solcher Anordnungen, wobei die erste mit horizontalen Schwingstäben 4a in z-Richtung wirkt (die zweite Anordnung und seine Nutzlast wirkt als Masse für die erste), die zweite Anordnung entspricht der Fig. 16 und wirkt also in x-y-Richtung. Die x-y-z-Stöße werden am Bauteil 2a eingebracht. Die Schwinger 4a der ersten Anordnung sitzen drehbar an ihren Angriffspunkten 3a und sind an ihren ersten Punkten 7a über Stelzen 21 mit dem Bauteil 2b verbunden. Durch die Schwinger 4a werden Stöße in z-Richtung absorbiert. Die Stelzen sind in dem speziellen Fall eingesetzt, damit die Schwinger 4a frei schwingen können (das wäre nicht der Fall, falls das Bauteil 2b ein Rahmen anstelle einer Platte wäre). Die Schockabsorption in x-y-Richtung erfolgt wie in Fig. 10 mittels Schwinger 4b, mit Angriffspunkten 3b und ersten Punkten 7b.

Zur Vereinfachung der Zeichnung wurden in Fig. 16 und 17 gegenüberliegende Schwinger nicht gezeichnet. Die Stäbe 4a werden in der Praxis etwas durchhängen (unschädlich). In Fig. 16 und 17 wurde aus zeichnungstechnischen Gründen Schwingstäbe mit quadratischem Querschnitt gezeichnet; aus Symmetrierungsgründen sind jedoch Rundstäbe zu bevorzugen.

Anordnungen nach Fig. 16 und 17 können z.B. für die schockabsorbierende Montage von Kameras oder Festplatten verwendet werden, indem man sie an den als Masse 12 bzw. 12a gezeichneten Teilen direkt oder indirekt befestigt; sie stellen dann bei fester Montage natürlich einen Teil der Masse dar. Gleiche oder ähnliche Anordnungen können bei Gebäuden zwischen Fundament und Gebäudegrundplatte zur Erdbebensicherung eingesetzt werden.

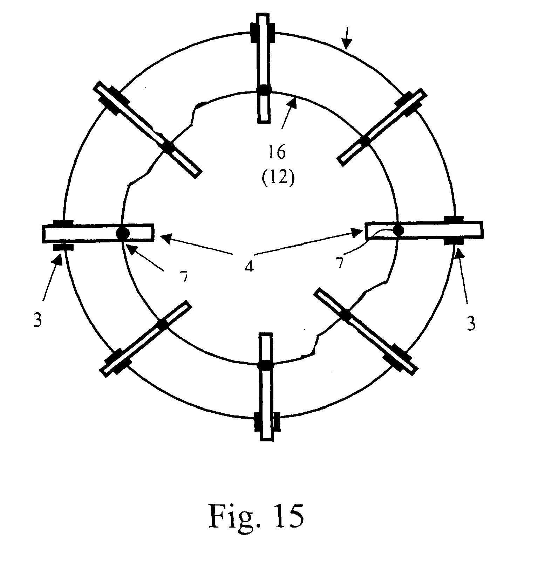

Fig. 15 zeigt ein Beispiel einer rotatorischen Schockabsorption nach Fig. 12B oben, wobei mehrere Schockabsorber unterschiedlicher Resonanzfrequenz verwendet werden, im Beispiel anhand unterschiedlicher Stabdicken und Stablängen realisiert. Die Realisierung von unterschiedlichen Resonanzfrequenzen ist natürlich auch über sonstige Geometrieunterschiede, Materialunterschiede oder verschiedene Hilfsmassen oder Kombination hiervon möglich.

Fig. 19A zeigt eine Anordnung mit drei parallelen Stabschwingern 4, die oben an einem Halter 2 fest eingespannt sind. Die Schwingungen der Stäbe sind gestrichelt eingezeichnet. Die parallel gezeichneten Stäbe sind vorteilhaft, aber nicht notwendigerweise parallel. An einer unteren Platte 190 sind die drei Schwinger 4 an den drei ersten Punkten 7 drehbar befestigt. In praktischen Versuchen hat sich eine drehbare Befestigung der Stäbe mittels horizontalen flexiblen Bändern bewährt, die senkrecht durchbohrt sind, und über größeren Aussparungen in der Platte 190 gespannt sind. Die dämpfenden Elemente 30 sind schräg zwischen der oberen und der unteren Platte befestigt. Aus zeichentechnischen Gründen sind nur zwei von vorzugsweise dreien gezeichnet, die so am Umfang etwas versetzt oder mit Knicken versehen sind, daß sie sich nicht im Zentrum berühren. An der Platte direkt befestigt ist die Nutzmasse 12, z,.B. eine nach unten gerichtete Kamera. Horizontale Erschütterungen werden durch das System unterdrückt, vertikale nicht. Vertikale Bewegungen sind bei dieser Kamera-Orientierung unkritisch. Sie führen insbesondere bei langen Brennweiten nicht zu verwackelten Bildern, während horizontale Bewegungen in diesem Fall gerade besonders kritisch sind.

Die gezeichneten Dämpfer müssen nicht direkt am ersten Punkt angreifen; sie können auch indirekt über die Platte 190 mit dem Ersten Punkt verbunden sein (gestrichelt gezeichnet: 30x).

Die gezeichneten Dämpfer können auch durch eine plastisch biegsame Masse ersetzt werden, die zwischen den Platten befestigt wird, mit Aussparungen für die Schwingstäbe (z.B. sektorförmigen Aussparungen nach Fig. 19A unten).

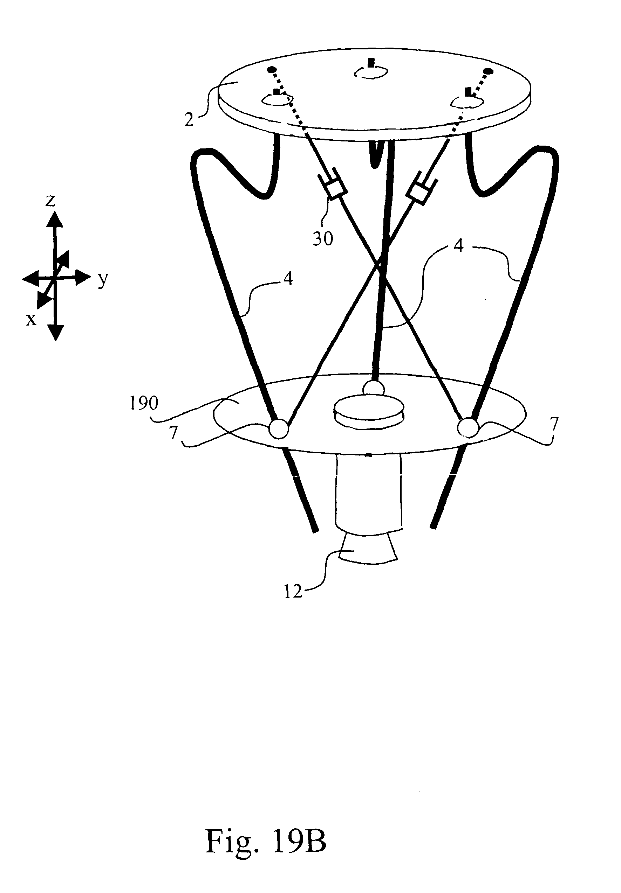

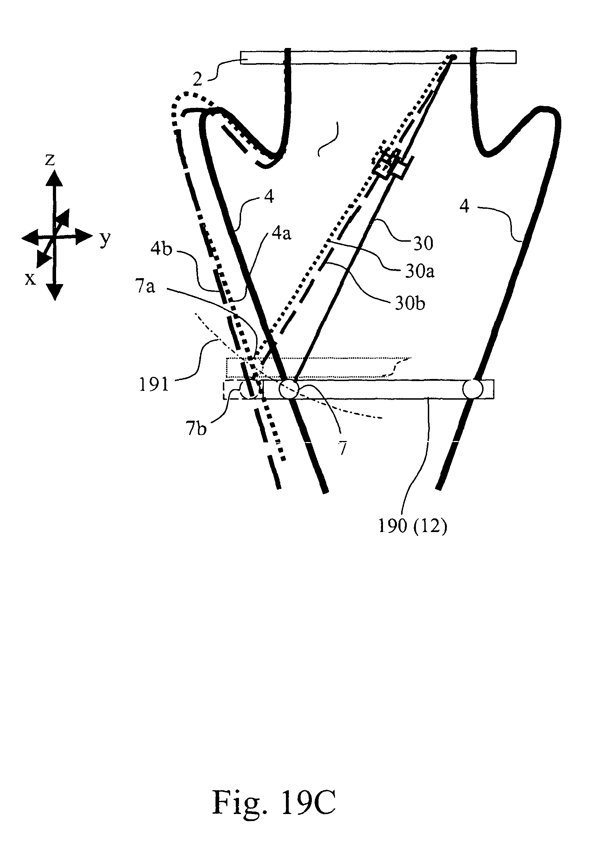

Fig. 19B zeigt die gleiche Anordnung, jedoch mit Schwingern 4 gemäß Fig. 6B. Bei dieser Anordnung können die Schwinger Stöße in allen drei Richtungen (x,y,z) aufnehmen, wobei auch hier die ersten Punkte stillstehen. Im Gegensatz zu Fig. 19A und anderen Anordnungen haben die ersten Punkte 7 drei translatorische Freiheitsgrade: die Punkte können durch eine Kraft in allen Richtungen verschoben werden, während dies in Fig. 19A für die Z-Richtung nicht der Fall ist. Dimensionierungshinweise ergeben sich aus der folgenden Erläuterung der (zur Vereinfachung der Zeichnung) zweidimensionalen Darstellung in Fig. 19C: Durch einen kurzen Schock (beliebige Richtung) können Grundschwingungen entstehen, die durch das dämpfende Element 30 absorbiert werden sollen. Ist das dämpfende Element zu stark eingestellt, (Extremfall: steifes Element), so neigt es dazu, seine Länge beizubehalten, der erste Punkt 7 wird sich also auf dem strichpunktiert gezeichneten Kreis 191 bewegen; dabei wird der Schwinger 4 nach oben in die punktiert gezeichnete Lage 4a verschoben, das dämpfende Element 30 in die punktiert gezeichnete Lage 30a, der erste Punkt 7 in die Position 7a. Ist das dämpfende Element sehr schwach eingestellt, so neigt es eher dazu, seine Länge zu verändern, der erste Punkt 7 wird sich also entsprechend der natürlichen Grundschwingung des Schwingers bewegen, durch die mit langen Strichen angedeutete Lage 4b des Schwingers bzw. 30b des dämpfenden Elements angedeutet (erster Punkt in Position 7b). Das dämpfende Element muß also einerseits ausreichend stark eingestellt werden, um die Grundschwingung ausreichend wirksam abzudämpfen, andererseits darf die durch die Längenänderung des Dämpfers verursachte Kraft (unter Berücksichtigung der Geschwindigkeitsverhältnisse) nicht stärker sein als die für die punktiert gezeichnete Lage erforderliche Federkraft.

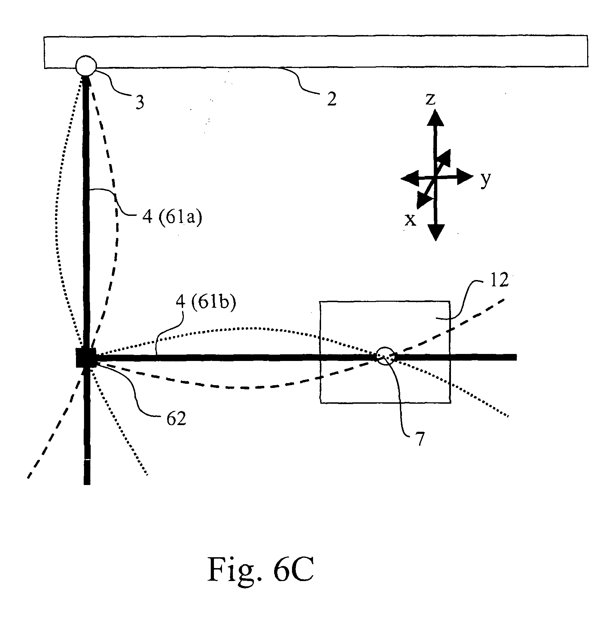

Fig. 6c zeigt eine Hintereinanderschaltung zweier (stabförmiger) Schwinger, des ersten Schwingers (61a) und des zweiten Schwingers (61b), die an einem Punkt (62) miteinander verbunden sind, je nach Anwendung fest oder drehbar. Bei drehbarer Befestigung können zur Sicherung der statischen Lage nicht gezeichnete rotatorisch wirkende Hilfsfedern am Drehpunkt verwendet werden. Bei fester Verbindung sind die Schwinger vorzugsweise auf die gleiche Schwingfrequenz abgestimmt, und haben besonders bevorzugt die gleiche Geometrie, wie in der Zeichnung gezeigt; der erste Schwinger (61a) ist in diesem Fall am Punkt 3 bevorzugt drehbar eingespannt. Die Masse 12 ist am ersten Punkt 7 drehbar am zweiten Schwinger befestigt.

Bei Stößen auf die Baueinheit 2 in y-Richtung wird der erste Schwinger angeregt. Bei Stößen in z-Richtung wird der zweite Schwinger angeregt. Bei Stößen in x-Richtung oder Stößen schräg zu den Koordinatenachsen werden beide Schwinger angeregt. Bei fester Verbindung (62) tendiert das System bei gemeinsamen Schwingungen beider Schwinger zu dem in der Zeichnung angedeuteten Verhalten: beide Schwinger wechseln gemeinsam zwischen der punktiert und der gestrichelt gezeichneten Lage. Trotz fester Verbindung (62) verhält sich der zweite Schwinger so, wie er sich als Einzelschwinger bei drehbarer Einspannung verhalten würde.

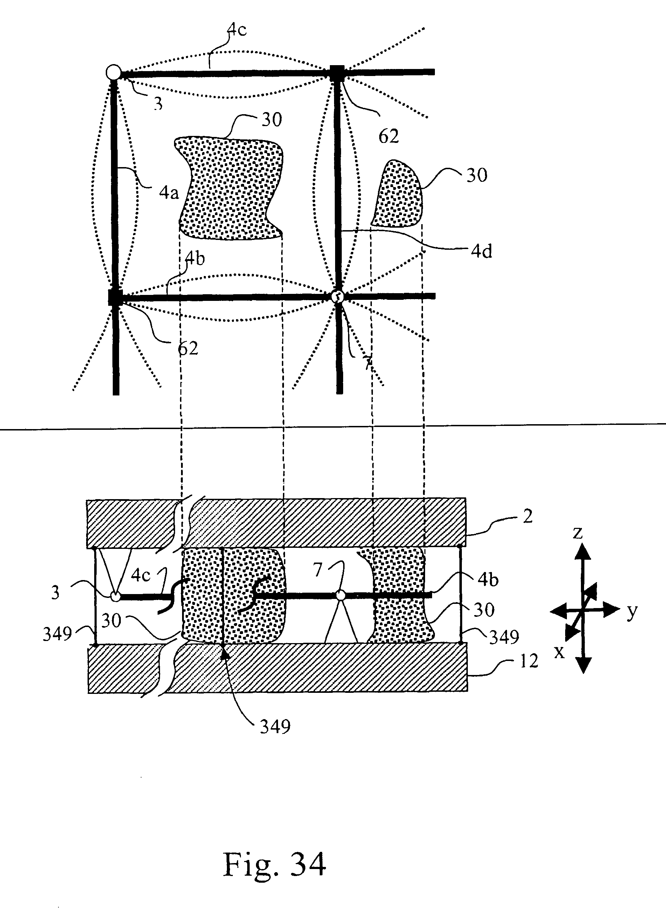

Fig. 34 zeigt eine Parallelschaltung zweier Hintereinanderschaltungen nach Fig. 6c, mit gemeinsamem Punkt 3 und gemeinsamem erstem Punkt 7 (oben: Draufsicht, unten: Seitenansicht, links etwa auf der Höhe von Schwinger 4c geschnitten, rechts etwa auf der Höhe von Schwinger 4b geschnitten). Die vier (stabförmigen) Schwinger 4a,4b,4c,4d sind horizontal orientiert zwischen Baueinheit 2 und Bauteil 12 angeordnet. Die Baueinheit ist am Punkt 3 mit Schwinger 4a und 4c verbunden, das Bauteil ist drehbar am ersten Punkt 7 mit Schwinger 4b und 4d verbunden. Zwischen Baueinheit und Bauteil befinden sich ein oder mehrere Dämpfungseinrichtungen 30, hier in Form eines zumindest teilweise plastisch verformbaren Materials oder auch in Form von gegeneinander reibenden Flächen (letztere Version nicht gezeichnet). Die Dämpfungseinrichtung kann auch gleichzeitig eine in z-Richtung wirksame Kraftverbindung darstellen, um a) bei stehender Anordnung (Bauteil steht auf Baueinheit als Unterlage) eine Berührung der Schwinger mit Bauteil oder Baueinheit zu verhindern, oder um b) bei hängender Anordnung (Bauteil hängt an Baueinheit) das Herunterfallen des Bauteils zu verhindern. Um dies sicher zu verhindern können zusätzlich zwischen Baueinheit und Bauteil Halteelemente 349 eingezogen sein, auf Druck bzw. Zug wirkend. Die Halteelemente wirken wesentlich in z-Richtung und sind in x- und y-Richtung verbiegbar. Anstelle von Halteelementen kann auch eine horizontale (x-y)-Führung von Baueinheit und Bauelement verwendet werden. Anstelle von Haltelementen können als Schwinger auch Bänder (Blattfedern) mit zumindest näherungsweise rechteckigem Querschnitt verwendet werden, mit deutlich größerer Ausdehnung des Rechtecks in z-Richtung. Bei symmetrischen Schwingern, ohne Halteelemente und ohne Führung wirkt die Anordnung in allen drei Koordinatenrichtungen; ansonsten wirkt die Anordnung zumindest in x- und y-Richtung. Mit der Anordnung gelingt eine sehr flache Bauweise (wesentlich flacher als aus darstellungstechnischen Gründen gezeichnet) bei Wirksamkeit in zwei bzw. drei Koordinatenrichtungen.

Es ist nicht erforderlich, daß die Schwinger, wie gezeichnet, rechtwinklig zueinander stehen. Die Schwinger können gekrümmt sein, auch in die Zeichenebene hinein.

Die Anordnung kann aufgrund ihrer flachen Bauweise z.B. als Werkzeughalter an einem Roboterhandling oder x-y-Tisch eingesetzt werden.

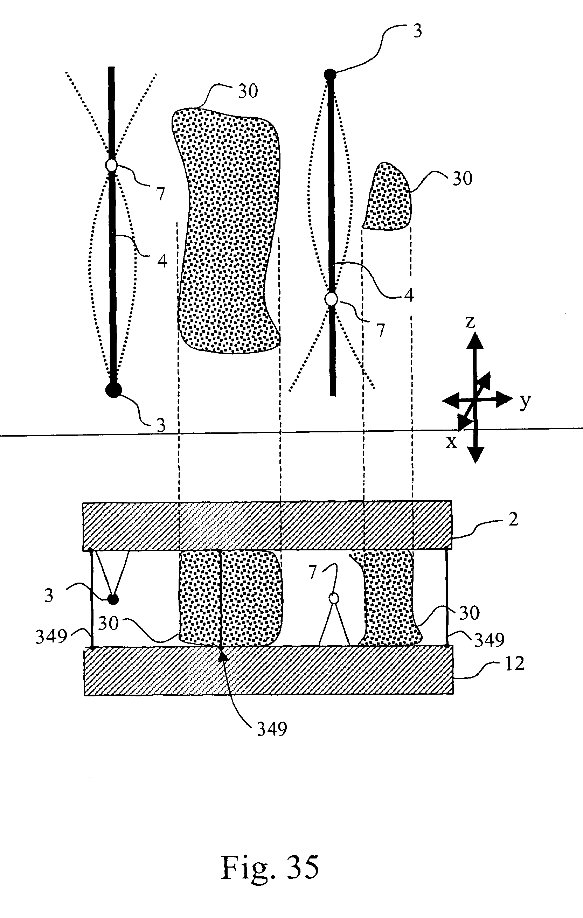

Fig. 35 zeigt eine schematische Ansicht einer eindimensional (in y-Richtung) wirkenden erfindungsgemäßen Ausführungsform, entsprechend Aufbau Fig. 34, jedoch mit antiparallel geschalteten Schwingern. Aufgrund der flachen Bauweise kann die Anordnung z.B. vorteilhaft als Werkzeughalter an einer Lineareinheit eingesetzt werden.

Es hat sich gezeigt, daß Anordnungen mit leicht unsymmetrischer Bauweise (z.B. nach Fig. 19A/19B, Erläuterung unten) zu Dreh-Vibrationen neigen (bei trotzdem stabiler Mittelpunktsposition). Um ein genaues Symmetrieren zu umgehen, können die Dreh-Vibrationen auch durch "Nachschalten" einer Anordnung nach Fig. 12A/12B/15 unterbunden werden, grundsätzlich auch durch "Nachschalten" eines Dreh-Tilgers.

Bei Hintereinanderschaltungen kann die zweite Anordnung so dimensioniert werden, daß sie gleichzeitig als Tilger für die erste Anordnung wirkt. Durch die Hintereinanderschaltung wird die Schock-Absorptionswirkung (Störamplitude) der Einzelanordnungen multipliziert.

Die vorstehend beschriebenen bevorzugten Ausführungsformen können miteinander beliebig kombiniert werden. Erfindungsgemäß werden diese Ausführungsformen nachstehend für verschiedene Anwendungen beschrieben.

### Anwendungen

### Festplatte etc.

In einer Anwendung ist die Baueinheit ein Gehäuse und das Bauteil eine Datenspeichereinrichtung, wie eine elektronische, magnetische, optische oder magneto-optische Datenspeichereinrichtung, insbesondere eine Festplattenspeichereinrichtung oder Laufwerk für Plattenspeicher wie CD und DVD. Vorzugsweise werden mehrere parallelgeschaltete Schwingeinrichtungen mit je drei Freiheitsgraden und einem dämfenden Element aus verformbarem Material verwendet, siehe Fig. 28. Damit läßt sich eine flache Bauweise und preiswerte Dämpfung erreichen. Weitere Realisierungsbeispiele zeigen Fig. 16 und 17.

### Kamera, Spiegel etc.:

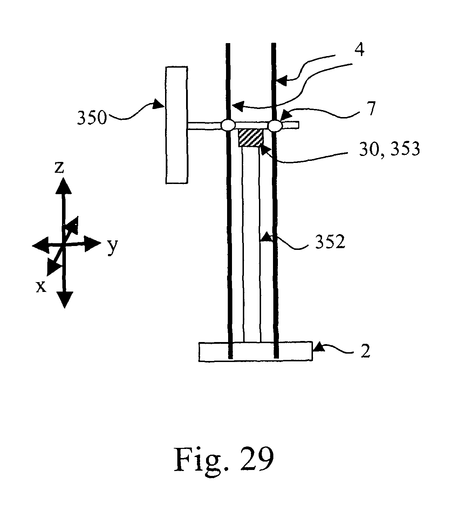

In einer Anwendung ist die Baueinheit ein Gestell oder Fahrzeug, und das Bauteil eine optische Einrichtung, wie eine Aufnahmeeinrichtung, insbesondere eine Kamera, eine optische Strahleinrichtung, insbesondere ein Laser, oder ein Spiegel. Für Fahrzeugspiegel werden vorzugsweise mindestens zwei parallelgeschaltete gleichartige schwingenden Elemente verwendet. Der Aufbau kann dem nach Fig. 19A oder 19B entprechen. Eine weitere erfindungsgemäße Anordnung mit zwei schwingenden Elementen zeigt Fig. 29: An der Baueinheit 2, hier dem Fahrzeug, z.B. an einem Motorradlenker, sind zwei schwingende Elemente befestigt, an deren Schwingungsknoten ist drehbar ein Rückspiegel 350 befestigt. Vorteil der Befestigungsart ist, daß bei Schwingungen um die x-Achse der Spiegel ohne Änderung der Orientierung parallel verschoben wird. Bei drei schwingenden Elementen wie in Fig. 19 gilt dies für alle Achsen. Vibrationen und Stöße in x- und y-Richtung werden über die Schwinger absorbiert. Als dämpfendes Element wird ein viskoses Material 353 verwendet, das mit der Baueinheit über eine Verlängerung 352 in Verbindung steht.

### Bohrhammer und dgl.:

In einer Anwendung ist die Baueinheit eine Hand-Werkzeugmaschine wie ein Presslufthammer, ein Elektromeißel, eine Schlagbohrmaschine oder ein Bolzensetzgerät oder dergleichen, und das Bauteil ist ein Halteteil, insbesondere ein Handgriff (Ziel: Vermeidung einer Gesundheitsgefährdung). Vorteilhaft befindet sich die Schwingungseinrichtung innerhalb des Halteteils. Dies hat den Vorteil, dass eine Berührung der Schwingungseinrichtung vermieden wird und eine mögliche Fehlbenutzung ausgeschlossen wird.

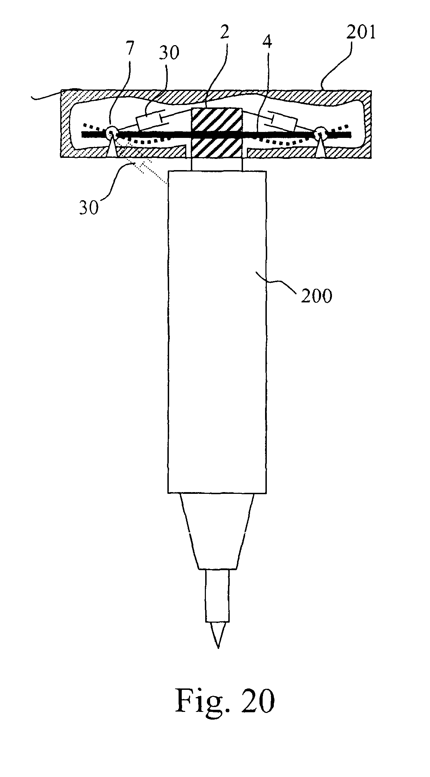

Fig. 20 zeigt einen beidhändig zu bedienenden Preßluftmeißel 200 oder dergleichen, dessen Griff 201 mit einer erfindungsgemäßen Anordnung vibrationsgeschützt ist, wobei sich die schwingenden Teile zum Berührungsschutz im Griff befinden.

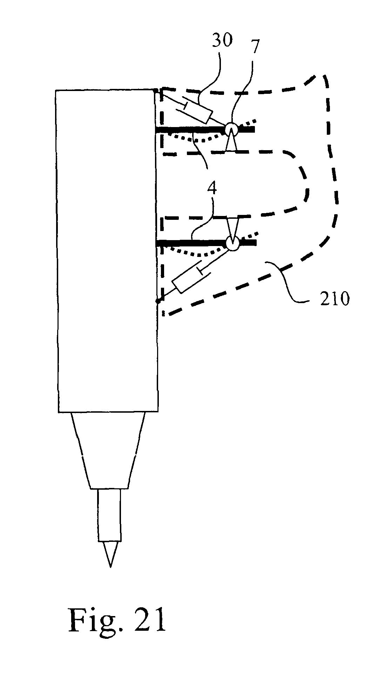

Fig. 21 zeigt eine Schlagbohrmaschine, einen Elektromeißel, ein Bolzensetzgerät oder dergleichen, dessen Griff mit einer erfindungsgemäßen Anordnung vibrationsgeschützt ist (Schwinger am Gerät fest eingespannt), wobei sich die Anordnung erfindungsgemäß im Griff 210 befindet.

### Hammer und dgl.:

In einer Anwendung ist die Baueinheit ein Hammerkopf, und das Bauteil der Griff des Hammers, Schwingeinrichtung und Dämpfungseinrichtung befinden sich im Hammergriff, was eine kompakte Bauweise ermöglicht.

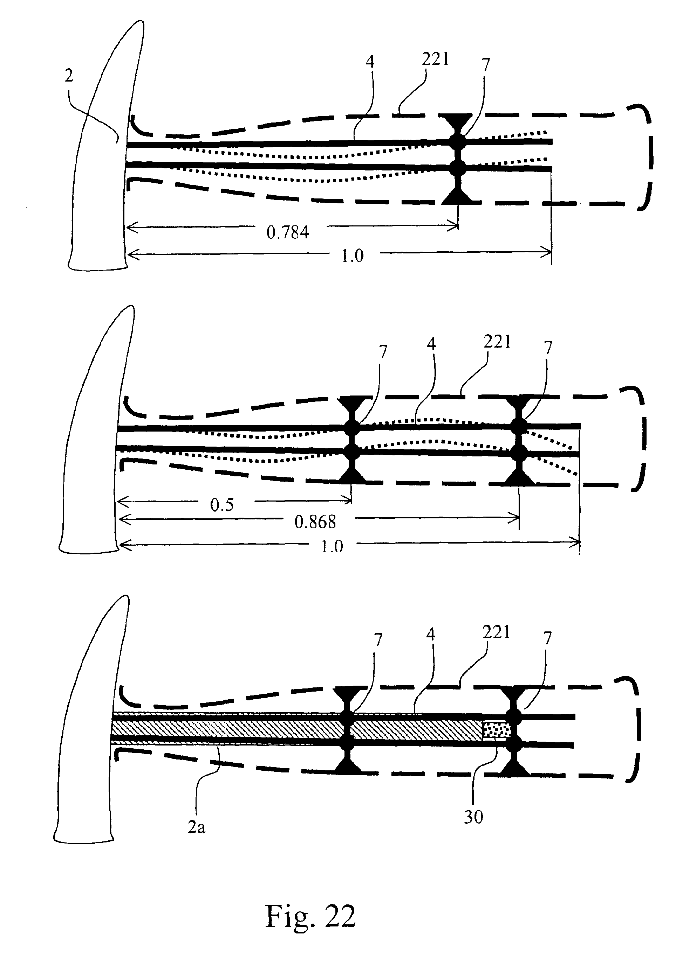

Fig. 22 zeigt einen einfachen Hammer oder dergleichen, dessen Griff 221 mit einer erfindungsgemäßen Anordnung vibrationsgeschützt ist. Im einzelnen sind am Hammerkopf 2 zwei Schwingstäbe 4 fest angeordnet. Der Griff 221 ist im Bereich des freien Schwingungsknotens (Abbildung oben) bzw. der zwei Schwingungsknoten (Abbildung Mitte und unten) der beiden Schwingstäbe 4 an Verbindungsstellen 7 drehbar befestigt. In Fig. 22 unten ist das dämpfende Element 32 eingezeichnet, es besteht aus einem plastischen Material, das, über eine fixe, möglichst steife Verlängerung 2a, mit dem Hammerkopf 2 verbunden ist. Die beiden Schwinger 4 sind am Hammerkopf fest eingespannt. Diese Anordnung mit zwei Schwingstäben hat den Vorteil, dass auch bei der drehbaren Befestigung des Griffs die statische Position vorgegeben ist.

### Labortisch und dgl.:

In einer Anwendung ist die Baueinheit die Standfläche für ein Gestell oder einen Tisch, insbesondere ein Labortisch, und das Bauteil ist das Gestell bzw. der Tisch, wobei im letzteren Fall sich die Schwingeinrichtung vorzugsweise im Tischfuß befindet, was dem Tisch ein elegantes Aussehen verleiht. Dies hat den Vorteil, dass eine Berührung der Schwingungseinrichtung vermieden wird und eine mögliche Fehlbenutzung ausgeschlossen wird.

Fig. 9 zeigt mit einem stehendem Schwingstab 4 eine Anordnung zur Absorption horizontaler Stöße an einem Labortischfuß, der als Masse 12 fungiert. Ist der Tisch ausreichend starr, so ist er gemeinsame Masse für ggf. mehrere Füße. Der Tischfuß ist zumindest am unteren Ende innen hohl, in dem Hohlraum befindet sich der Schwinger, bestehend aus Schwingstab 4 und ggf. einer oder mehreren Hilfsmassen 5. Der Schwingstab trägt am unteren Ende das Tischgewicht und ist dort etwas stärker. Der Schwingstab 4 steht im Angriffspunkt 3 frei drehbar gelagert auf dem Bauteil 2. Aufgrund der Verstärkung und aufgrund der Hilfsmasse 5 ist der erste Punkt gegenüber dem Standardfall (Fig. 1 links) nach unten verschoben. Wegen des ansonsten unstabilen Gleichgewichts sind Rückstellfedern 10 angebracht. Schocks am Bauteil 2, die in x- oder y-Richtung wirken, werden durch den Schwinger absorbiert. Falls erforderlich, wird eine eventuell aufkommende Grundschwingung durch dämpfende Elemente 30, die eine horizontale Wirkkomponente besitzen und zumindest näherungsweise am ersten Punkt 7 ansetzen, unterbunden. Die eingezeichneten dämpfenden Elemente greifen hier nicht direkt am ersten Punkt an, sondern indirekt über ein erstes Bauelement 901.

Ein Beispiel zum Abfangen vertikaler Stöße zeigt Fig. 10, mit einem beidseitig eingespannten Schwinger 4 und zwei ersten Punkten 7, mit der Masse 12. Die Masse 12 könnte z.B. ein Tischfuß sein, der gegen vertikale Schocks gesichert werden soll. Aus zeichentechnischen Gründen wurde eine eventuell durch die Schwerkraft bedingte auftretende Durchbiegung nicht gezeichnet.

Man kann Anordnungen nach Fig. 9 und 10 hintereinanderschalten, so daß Stöße in allen drei Raumrichtungen abgefangen werden.

### Fahrzeugsitz:

In einer Anwendung ist die Baueinheit ein Fahrzeug und das Bauteil ein Fahrzeugsitz.

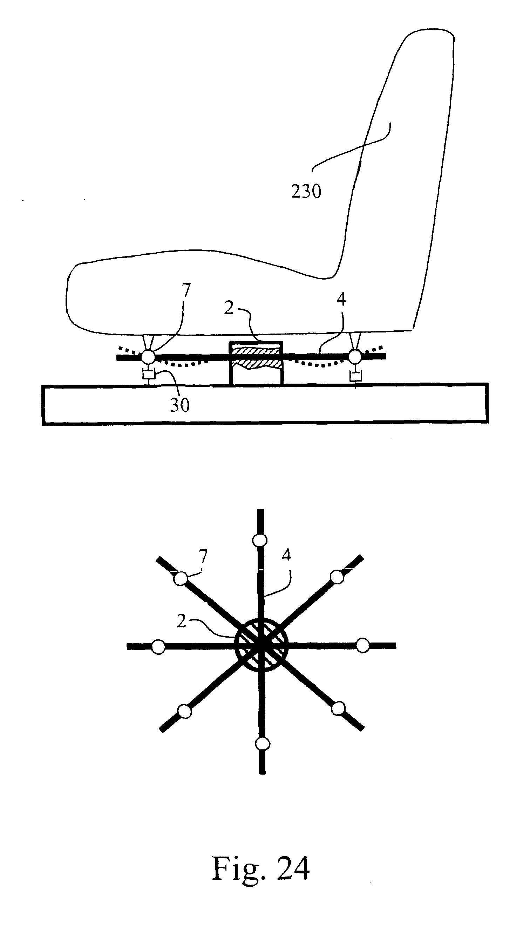

Fig. 23 zeigt einen Autositz 230 oder dergleichen, der mit einer erfindungsgemäßen Anordnung gegen vertikale Stöße und hochfrequente Vibrationen geschützt ist. Mehrere überkreuz liegende stabförmige Schwinger (z.B. Flachstahl) sind an einer ringförmigen Halterung fest eingespannt. Anstelle eines Rings und kreuzförmiger Stabstruktur sind natürlich auch "kartesische" Formen mit rechteckiger Einspannung 2 und parallel (überkreuz) liegenden Schwingern möglich. Zur Erhöhung der Befestigungssicherheit können die Stäbe durch eine Platte (ggf. mit Löchern zur Erhöhung der Flexibilität) ersetzt werden, wobei sich die ersten Punkte an den Knotenlinien von Chladnischen Klangfiguren befinden. Eine alternative Anordnung zeigt Fig. 24 für Spezialanwendungen, bei der durch diese Konstruktion eine gewünschte weiche Grundfederung erreicht wird.

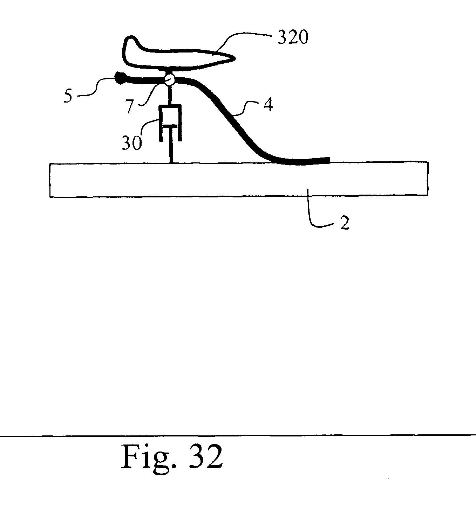

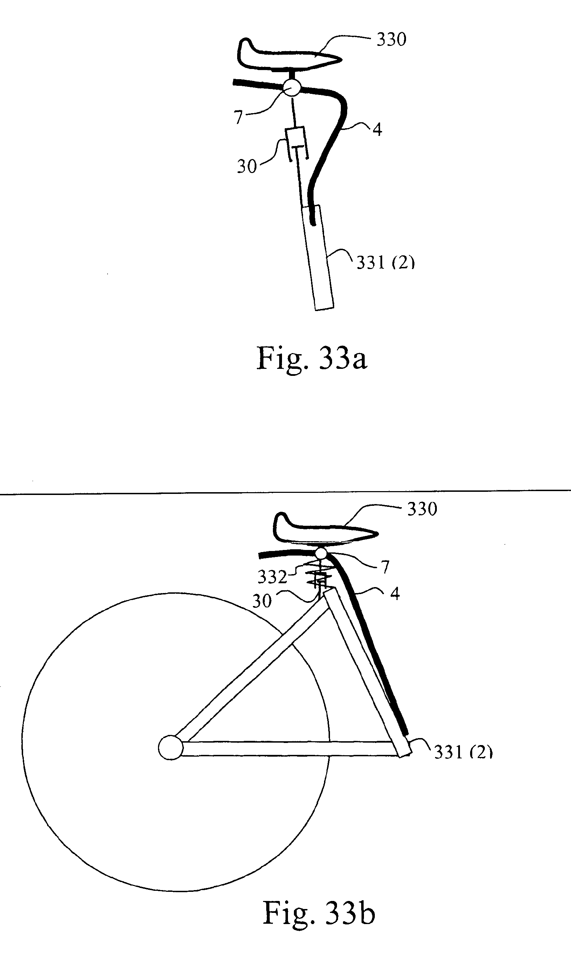

Eine erfindungsgemäße Anordnung eines Fahrzeugsitzes für eine landwirtschaftliche Maschine, wie einen Traktor oder dergleichen zeigt Fig. 32. Eine erfindungsgemäße Anordnung für ein Fahrrad zeigen Fig. 33a und Fig. 33b, mit leicht unterschiedlicher Geometrie, wobei vorteilhaft der Fahrradsattel durch eine zusätzliche federnde Einrichtung 332 gestützt wird (z.B. eine Schraubenfeder, parallel zum dämpfenden Element, nur in Fig. 33b gezeichnet). Mit dieser zusätzlichen federnden Einrichtung wird im wesentlichen das statische Gewicht des Fahrers abgefangen, während mit dem Schwinger neben dem statischen Gewicht die Stöße abgefangen werden (vgl. auch Feder 20 in Fig. 12a oder Feder 310 in Fig. 31, Beschreibung unten). Feder 332 und Dämpfer können in Kombination als gemeinsames Bauelement realisiert sein, z.B. als Feder mit zwischen den Windungen eingelagertem plastischem Material.

### Gestell von Handhabungsautomat:

In einer Anwendung ist das Bauteil ein Gestell und die Baueinheit der bewegliche Teil eines Handhabungsgeräts, das an dem Gestell befestigt ist.

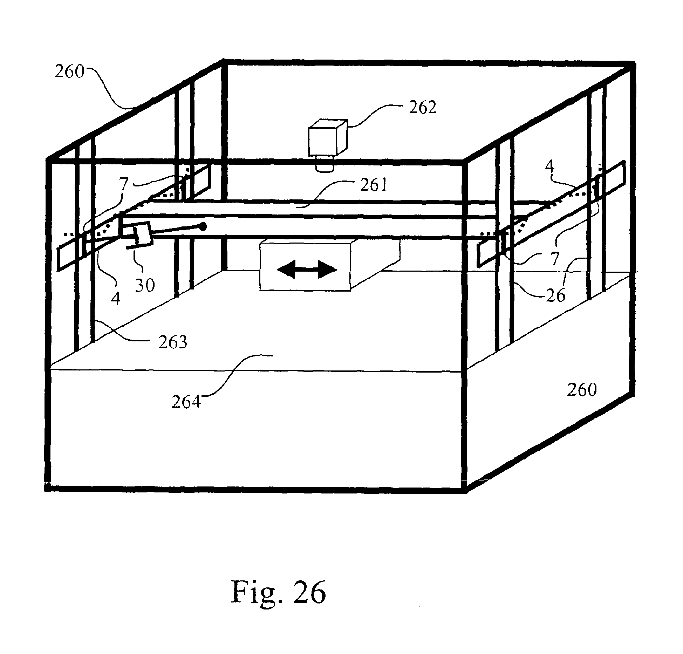

Fig. 26 zeigt ein Maschinengestell 260, an dem über eine erfindungsgemäße Anordnung eine Linearachse 261 befestigt ist. Durch abruptes Bremsen oder Beschleunigen der Achse entstehen Stöße, die das Gestell zu Schwankungen veranlassen, die z.B. schädlich sind, wenn am Gestell schwingungsempfindliche Geräte (z. B. eine Kamera 262, die auf das Arbeitsfeld 264 gerichtet ist) montiert sind. Durch die erfindungsgemäße Anordnung werden die Schwankungen unterbunden, außerdem wird die Stoßbelastung des Gestellmaterials, des Hallenbodens etc. verringert. Die beiden Schwinger 4 sind als federnde Bänder (Blattfedern) ausgebildet, mit dem ersten Punkt 7, wo sie mit senkrechter Drehachse an den senkrechten Elementen 263 befestigt sind. Die Schwingungen sind gestrichelt eingezeichnet. Von den dämpfenden Elementen ist nur eines eingezeichnet. Mit gleichen oder sinngemäß modifizierten Konstruktionen wird die gleiche Wirkung natürlich auch erreicht bei gestellmontierten Robotern, Bandstoppern, Pneumatikzylindern etc.

### Abtriebswelle:

In einer Anwendung ist die Baueinheit eine erste rotierende Einrichtung, wie eine Antriebswelle, vorzugsweise von einem Fahrzeug, und das Bauteil eine zweite rotierende Einrichtung, wie eine Abtriebswelle. Hierzu können Anordnungen mit transversal schwingenden Elementen nach Fig. 12A, 12B, 15 (Beschreibung s.o.) verwendet werden oder Anordnungen mit Torsionsschwingern nach Fig. 27.

### Mikrophon und dgl.:

In einer Anwendung ist das Bauteil eine akustischer Sensor, wie ein Mikrofon, Schwingungsmesser, Seismograph, Hörgerät oder dergleichen, und die Baueinheit eine Einrichtung, an der das Bauteil befestigt ist. Bei Hörgeräten, insbesondere dem In-Ohr-Typ, besteht die Aufgabe, Körperschall des Gehäuses möglichst gut vom Mikrophon zu isolieren, um akustische Rückkopplungen zu vermeiden. Daher wird das Mikrophon möglichst gut gedämpft im Hörhilfegerät aufgehängt. Auch die unerwünschte Übertragung von Körperschall (Knochen) auf das Mikrophon wird dadurch unterdrückt.

Umgekehrt ist die erfindungsgemäße Anordnung besonders vorteilhaft zur Aufnahme von Körperschall der Baueinheit selbst.

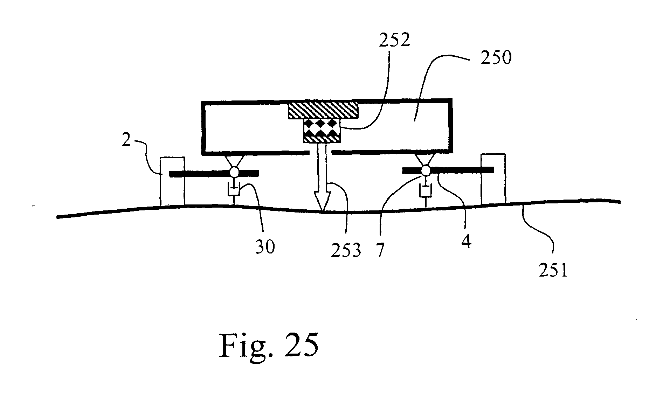

Fig. 25 zeigt einen Meßaufnehmer 250 (Meßspitze oder Meßstrahl 253, Meßeinrichtung 252, z.B. Piezokristall), z.B. ein Mikrophon für Luftschall oder Wasserschall, oder dergleichen, mit einer erfindungsgemäßen stoß- und vibrationsunterdrückenden Halterung, um Störsignale, die von der Halterung kommen, zu unterdrücken. In der Figur ist speziell der besonders interessante Fall der Aufnahme von Körperschall des Prüfkörpers 251 gezeigt, also des Teils, an dem der Aufnehmer selbst befestigt ist. Bei dieser Aufgabenstellung können Vibrationen des Prüfkörpers, die vom Meßaufnehmer mitgemacht werden, nicht erfaßt werden. Dieser Effekt wird durch die erfindungsgemäße Anordnung vermieden.

### Lautsprecher:

In einer Anwendung ist die Baueinheit ein Lautsprecher und das Bauteil die Einrichtung, an der der Lautsprecher befestigt ist. Damit werden die - in der Regel nicht vorhersagbaren - Resonanzen der Teile, an denen der Lausprecher befestigt ist oder mit denen er direkt oder indirekt in Verbindung steht, unterdrückt.

### Motorhalterung:

In einer Anwendung ist die Baueinheit ein Motor und das Bauteil ein Fahrgestell oder ein Gerätehäuse. Damit werden Fahrgestell- bzw. Gehäusevibrationen verringert und damit auch die damit verbundene Schallemission. Vorteilhaft besitzt in Fällen, in denen entlang der Motorachse keine oder nur geringe Vibrationen auftreten, die Schwingungseinrichtung aus Aufwands- und Stabilitätsgründen nur zwei Freiheitsgrade in der Ebene senkrecht zur Motorachse.

Eine Lösung für Fälle, in denen drei Freiheitsgrade erforderlich sind, wird in Fig. 28 gezeigt. Die Schwinger 4 besitzen hier drei Freiheitsgrade mit am eingezeichneten Punkt 7 näherungsweise zusammenfallenden Schwingungsknoten. Die Schwinger liegen bei dieser speziellen Konstruktion teilweise in einer Aushöhlung des dämpfenden Elements 30, das hier aus plastisch verformbarem Material besteht. Die Konstruktion gestattet auch für drei Freiheitsgrade eine flache Bauweise. Das Bauteil ist hier hängend gezeichnet, es kann natürlich durch Umkehren ebenso stehend gezeichnet werden.

### Radaufhängung:

In einer Anwendung ist die Baueinheit eine Radnabe oder eine Fahrzeugachse und das Bauteil ist ein Fahrgestell. Vorteilhaft wird hier eine Schwingeinrichtung eingesetzt, die Longitudinalschwingungen (vgl. Fig. 30) ausführt. Vorteilhaft benötigt die Anordnung ungefähr den gleichen Bauraum wie die übliche Anordnung mit Schraubenfeder und die Fahrzeugdynamik wird nicht wesentlich verändert.

Ein Anwendungsbeispiel dafür ist eine Radaufhängung nach Fig. 31. Schwinger 4 ist ein Longitudinalschwinger gemäß Fig. 30, wobei anstelle einer Schraubenfeder natürlich auch eine Tonnenfeder, Bananenfeder, Spiralfeder oder sonst ein longitudinal schwingendes elastisches Element in Frage kommt. Am ersten Punkt 7 ist ein Verbindungselement 311 drehbar befestigt, am Verbindungselement sitzt das Fahrgestell 312 auf. Die Dämpfungseinrichtung 30 verbindet Punkt 7 mit der Baueinheit 2 und kann prinzipiell als konventioneller Stoßdämpfer realisiert sein. Zusätzlich wird vorteilhaft eine Feder 310 eingesetzt, die den Großteil der statischen Last abfängt, während mit dem Schwinger 4 neben dem statischen Gewicht die Stöße absorbiert werden. Das Verbindungselement 311 kann wie bisher ein auf der Feder 310 aufsitzender Federteller sein, der am Punkt 7 durchbohrt ist für die Realisierung der drehbaren Verbindung mit dem Schwinger 4. Zur Symmetrierung kann es sinnvoll sein, mit ineinander gedrehten Federn 4 nach Fig. 8 zu arbeiten.

### Schallabsorbierende Zwischenlage:

In einer Anwendung ist die Baueinheit ein Schallgenerator wie eine vibrierende Maschine oder ein Musikinstrument, insbesondere ein Piano oder Flügel, und das Bauteil eine Unterlage, auf der die Baueinheit steht.

Die Unterlage ist insbesondere der Fußboden, meist eine schwingfähige Zwischendecke. Mit der Anordnung wird lästige Körperschall-Ausbreitung durch das Gebäude unterbunden oder verringert.

### Schlußbemerkung:

Die Ausführungsformen der Anwendungen sind als Beispiele zu sehen. Die Patentanmeldung beansprucht weitere, nicht aufgeführte Anwendungen und Ausführungsformen, soweit sie sich aus der jewei- ligen Aufgabe und der Kombination aus Ansprüchen, Beschreibung oder Beispielen mit dem Stand der Technik ergeben. Insbesondere können einzelne Merkmale der verschiedenen Ausführungsbeispiele gegeneinander ausgetauscht oder miteinander kombiniert werden.

## Patentansprüche

1. Vorrichtung zum Verbinden eines Bauteils (12) mit einer Baueinheit (2) mit: a) mindestens einer mit der Baueinheit und dem Bauteil gekoppelten Schwingeinrichtung (4), die ein bestimmtes Eigenschwingverhalten aufweist, bei dem mindestens ein Schwingungsknoten bei Anregung durch Stoß oder Vibration ausgebildet wird, b) wobei das Bauteil an der Schwingeinrichtung an mindestens einer Verbindungsstelle (7), die an oder in der Nähe des/der Schwingungsknoten(s) liegt angeordnet ist, und c) mindestens einer Dämpfungseinrichtung (30) zum Dämpfen einer Grundschwingung der Schwingeinrichtung in Bezug zu der Baueinheit, wobei die Dämpfungseinrichtung am selben Schwingungsknoten wie das Bauteil befestigt ist, wobei das Bauteil an der Schwingeinrichtung drehbar befestigt ist.

2. Vorrichtung nach Anspruch 1, wobei die Dämpfungseinrichtung (30) direkt oder mittels eines ersten Bauelements (190, 901) an der Schwingeinrichtung (4)an oder in der Nähe eines der Schwingungsknoten befestigt ist.

3. Vorrichtung nach Anspruch 2, wobei die Dämpfungseinrichtung (30) mit der Baueinheit (2) derart verbunden ist, dass die Dämpfungseinrichtung eine Wirkkomponente aufweist, die in der Bewegungsrichtung der Verbindungsstelle (7) bei Grundschwingung liegt.

4. Vorrichtung nach einem der Ansprüche 1 bis 3, wobei die Schwingeinrichtung (4) mindestens ein elastisches Element aufweist, dessen Aufbau und/oder Masse so gewählt ist, dass die durch Stoss oder Vibration eingebrachte Energie mindestens teilweise in Schwingungsenergie einer Schwingung um Schwingungsknoten umgesetzt wird.

5. Vorrichtung nach einem der vorgenannten Ansprüche, wobei die Schwingeinrichtung (4) mindestens ein elastisches Element aufweist, wie einen Biegestab, vorzugsweise mit einem kreisförmigen Querschnitt, eine Schraubenfeder, eine Blattfeder, eine Spiralfeder, eine Schwingplatte oder ein sonstiges Bauteil aus elastischem Material, wie Gummi, oder Kombinationen solcher elastischer Elemente.

6. Vorrichtung nach dem vorgenannten Anspruch, wobei die Schwingeinrichtung (4) mindestens ein starres Element (71a) aufweist.

7. Vorrichtung nach einem der vorgenannten Ansprüche, wobei die Schwingeinrichtung (4) zumindest ein Stück (703) mit Einkerbungen aufweist, die die Nachgiebigkeit erhöhen, bevorzugt an Stellen starker Krümmung beim Schwingen.

8. Vorrichtung nach einem der vorgenannten Ansprüche, wobei die Schwingeinrichtung (4) drei ineinander gedrehte Schraubenfedern oder Spiralfedern aufweist mit je einer Verbindungsstelle (7).

9. Vorrichtung nach einem der vorgenannten Ansprüche, wobei die Dämpfungseinrichtung (30) einen hydraulischen Dämpfer oder einen Luftdämpfer aufweist, der in der Länge veränderbar ist.

10. Vorrichtung nach einem der vorgenannten Ansprüche, wobei die Dämpfungseinrichtung (30) durch Reibung zwischen zwei zueinander beweglichen Bauteilen wirkt, insbesondere einer gegenseitigen rotatorischen Bewegung.

11. Vorrichtung nach einem der vorgenannten Ansprüche, wobei die Dämpfungseinrichtung (30) einen Körper aus verformbaren Material, vorzugsweise Kunststoffschaum aufweist, der Schwingungen dämpft.

12. Vorrichtung nach einem der vorgenannten Ansprüche, wobei die Schwingeinrichtung (4) mindestens eine Hilfsmasse (5) aufweist, die derart an der Schwingeinrichtung angeordnet ist, dass sich ein bestimmtes Eigenschwingverhalten eingestellt.

13. Vorrichtung nach dem vorgenannten Anspruch, wobei die Schwingeinrichtung ein elastisches Kernmaterial aufweist, an dem mehrere Hilfsmassen (701a, 701b, 701c), vorzugsweise im Abstand voneinander angeordnet sind, wobei vorzugsweise zwischen den Hilfsmassen Dämpfungselemente (702) angeordnet sind.

14. Vorrichtung nach einem der beiden vorgenannten Ansprüche, wobei mindestens eine der Hilfsmassen (701a, 701b, 701c) an oder in der Nähe mindestens eines der Schwingungsbäuche an der Schwingeinrichtung angeordnet ist.

15. Vorrichtung nach einem der vorgenannten Ansprüche, wobei die Schwingeinrichtung mindestens ein Dämpfungsmittel aufweist, das vorzugsweise an oder in der Nähe mindestens einer der Schwingungsbäuche an der Schwingeinrichtung angeordnet ist, wobei das Dämpfungsmittel einen mit schwingungsabsorbierendem Material gefüllten Behälter oder eine aus schwingungsabsorbierendem Material bestehende Umhüllung der Schwingeinrichtung aufweist.

16. Vorrichtung nach einem der vorgenannten Ansprüche, mit einem Translations- oder Rotationstilger (21, 22), der direkt oder mittels eines zweiten Bauelements (901) an der Schwingeinrichtung (4) an oder in der Nähe eines Schwingungsknotens befestigt ist und auf die Grundschwingung der Schwingeinrichtung abgestimmt ist.

17. Vorrichtung nach einem der vorgenannten Ansprüche, wobei die Schwingeinrichtung (4) in mindestens zwei Schwingungsrichtungen bewegbar ist und für jede der zwei Schwingungsrichtungen ein bestimmtes Eigenschwingverhalten aufweist, wobei für jede der zwei Schwingungsrichtungen mindestens ein Schwingungsknoten bei Anregung durch Stoß oder Vibration ausgebildet wird und mindestens jeweils einer der Schwingungsknoten der zwei Schwingungsrichtungen einen zumindest näherungsweise gemeinsamen Schwingungsknoten bildet.

18. Vorrichtung nach dem vorgenannten Anspruch, wobei die Schwingeinrichtung (4) in drei Schwingungsrichtungen bewegbar ist und für jede der drei Schwingungsrichtungen ein bestimmtes Eigenschwingverhalten aufweist, wobei für jede der drei Schwingungsrichtungen mindestens ein Schwingungsknoten bei Anregung durch Stoß oder Vibration ausgebildet wird und mindestens jeweils einer der Schwingungsknoten der drei Schwingungsrichtungen einen zumindest näherungsweise gemeinsamen Schwingungsknoten bildet.

19. Vorrichtung nach einem der vorgenannten Ansprüche, zur Absorption von rotatorischen Schocks oder Vibrationen, mit mindestens einer, bevorzugt mehreren radial orientierten Schwingeinrichtungen (4), die in Drehrichtung Transversalschwingungen ausführen können.

20. Vorrichtung nach einem der vorgenannten Ansprüche, wobei die Schwingeinrichtung (4) mindestens ein elastisches Element aufweist, das als Torsionsschwinger wirkt.

21. Vorrichtung nach dem vorgenannten Anspruch, wobei der Torsionsschwinger ein elastisches Element aufweist, das bezogen auf eine Achse Torsionsschwingungen ausbildet, wie eine Stange, ein Rohr, eine Schraubenfeder, eine Spiralfeder und/oder Kombinationen mindestens eines dieser elastischen Elemente mit mindestens einem starren Element.

22. Vorrichtung nach Anspruch 20, wobei der Torsionsschwinger mehrere parallel angeordnete Schwingstäbe aufweist.

23. Vorrichtung nach einem der vorgenannten Ansprüche, wobei die Schwingeinrichtung (4) Longitudinalschwingungen mit Schwingungsknoten ausführen kann.

24. Vorrichtung nach einem der vorgenannten Ansprüche, wobei mindestens zwei Schwingeinrichtungen (4) parallel und/oder hintereinander angeordnet sind.

25. Vorrichtung nach dem vorgenannten Anspruch, wobei eine erste Schwingeinrichtung (4) bei einer ersten Resonanzfrequenz und eine parallelgeschaltete zweite Schwingeinrichtung bei einer zweiten Resonanzfrequenz arbeitet, die von der ersten Resonanzfrequenz verschieden ist.

26. Vorrichtung nach einem der vorgenannten Ansprüche, wobei eine erste Vorrichtung gemäß einem der vorgenannten Ansprüche und eine zweite Vorrichtung gemäß einem der Ansprüche 19 bis 22 hintereinandergeschaltet sind, wobei durch die zweite Vorrichtung rotatorische Schocks oder Vibrationen absorbiert werden, die aus der ersten Vorrichtung verbleiben.

27. System mit einer Baueinheit und einem Bauteil, das mit einer Vorrichtung nach einem der vorgenannten Ansprüche an der Baueinheit befestigt ist.

28. System nach Anspruch 27, wobei das Bauteil (12) eine Datenspeichereinrichtung ist, wie eine elektronische, magnetische, optische oder magneto-optische Datenspeichereinrichtung, insbesondere eine Festplattenspeichereinrichtung oder Laufwerk für Plattenspeicher wie CD und DVD, und wobei die Baueinheit (2) eine Einrichtung ist, an der die Datenspeichereinrichtung direkt oder indirekt befestigt ist, insbesondere ihr Gehäuse.

29. System nach dem vorgenannten Anspruch, mit mindestens einer Schwingeinrichtung (4) nach Anspruch 18, vorzugsweise mehreren solchen parallelgeschalteten Schwingeinrichtungen, und vorzugsweise einem dämpfenden Element nach Anspruch 11.

30. System nach Anspruch 27, wobei die Baueinheit (2) ein Gestell, Fahrzeug oder der bewegliche Teil eines Handhabungssystems wie eines Roboters oder einer Verfahrachse ist, und das Bauteil (12) eine optische Einrichtung, wie eine Aufnahmeeinrichtung, insbesondere eine Kamera, oder eine optische Strahleinrichtung, insbesondere ein Laser, oder ein Spiegel oder ein Werkzeug, wie ein Fräskopf, ein Druckkopf, eine Schweißeinrichtung und eine Drahtzufuhr ist.

31. System nach dem vorgenannten Anspruch, wobei die Baueinheit (2) ein Fahrzeug ist und das Bauteil (12) ein Fahrzeugspiegel ist, mit mindestens zwei, vorzugsweise drei parallelgeschalteten gleichartigen Schwingeinrichtungen (4).

32. System nach Anspruch 27, wobei die Baueinheit (2) eine Hand-Werkzeugmaschine ist, wie ein Presslufthammer, ein Elektromeißel, eine Schlagbohrmaschine oder ein Bolzensetzgerät und wobei das Bauteil (12) ein Halteteil ist, insbesondere ein Handgriff.

33. System nach dem vorgenannten Anspruch, wobei sich die Schwingeinrichtung (4) innerhalb des Halteteils befindet.

34. System nach Anspruch 27 wobei die Baueinheit (2) ein Hammerkopf ist, und wobei das Bauteil (12) ein Hammergriff ist, die Schwingeinrichtung sich im Hammergriff befindet wobei die Schwingeinrichtung zwei Biegestäbe aufweist, an denen der Hammergriff drehbar befestig ist und sich vorzugsweise eine Dämpfungseinrichtung nach Anspruch 11 im Hammergriff befindet.

35. System nach Anspruch 27, wobei die Baueinheit (2) die Standfläche für ein Gestell oder einen Tisch ist, insbesondere ein Labortisch, und das Bauteil (12) das Gestell bzw. der Tisch ist, wobei im letzteren Fall sich die Schwingeinrichtung (4) vorzugsweise im Tischfuß befindet.

36. System nach Anspruch 27, wobei die Baueinheit (2) ein Fahrzeug ist und das Bauteil (12) ein Fahrzeugsitz (230, 320, 330).

37. System nach dem vorgenannten Anspruch, wobei das Fahrzeug ein Fahrrad und der Fahrzeugsitz ein Fahrradsattel (330) ist, wobei der Fahrradsattel vorzugsweise durch eine zusätzliche federnde Einrichtung (332) gestützt wird.

38. System nach Anspruch 27, wobei das Bauteil (2) ein Gestell ist und die Baueinheit (12) der bewegliche Teil eines Handhabungsgeräts, das direkt oder indirekt an dem Gestell befestigt ist.

39. System nach Anspruch 27, wobei die Baueinheit (2) eine erste rotierende Einrichtung, wie eine Antriebswelle (275), vorzugsweise von einem Fahrzeug ist, und das Bauteil (12) eine zweite rotierende Einrichtung, wie eine Abtriebswelle (276) ist.

40. System nach Anspruch 27, wobei das Bauteil (2) eine akustischer Sensor ist, wie ein Mikrofon, Schwingungsmesser, Seismograph, Hörgerät oder dergleichen, und die Baueinheit(12) eine Einrichtung, an der das Bauteil befestigt ist.

41. System nach dem vorgenannten Anspruch, wobei der Sensor zur Aufnahme von Körperschall der Baueinheit (12) aufgebaut ist.

42. System nach Anspruch 27, wobei die Baueinheit (2) ein Lautsprecher ist und das Bauteil (12) die Einrichtung ist, an der der Lautsprecher befestigt ist.

43. System nach Anspruch 27, wobei die Baueinheit (2) ein Motor ist und das Bauteil (12) ein Fahrgestell oder ein Gerätegehäuse ist.

44. System nach dem vorgenannten Anspruch, wobei die Schwingungseinrichtung zwei Freiheitsgrade in der Ebene senkrecht zur Motorachse besitzt.

45. System nach Anspruch 27, wobei die Baueinheit (2) eine Radnabe oder eine Fahrzeugachse ist und das Bauteil (12) ein Fahrgestell.

46. System nach dem vorgenannten Anspruch, mit einer Schwingeinrichtung (4) nach Anspruch 23.

47. System nach Anspruch 27, wobei die Baueinheit (2) ein Schallgenerator, wie eine vibrierende Maschine oder ein Musikinstrument, insbesondere ein Piano oder Flügel ist, und das Bauteil (12) eine Unterlage, auf der die Baueinheit steht.

## Claims

1. Apparatus for connecting a structural member (12) with a structural unit (2) comprising: a) at least one oscillation device (4) coupled to said structural unit and said structural member, where the oscillation device has a specific natural oscillation characteristic wherein at least one oscillation nodal point is formed when excited by impulse or vibration, b) wherein the structural member at the oscillation device is arranged on at least one connecting point (7) which is situated on or near the oscillation nodal point(s), and c) at least one damping device (30) for damping a basic oscillation of the oscillation device relative to the structural unit, wherein the damping device is attached to the same oscillation nodal point as the structural member, and the structural member is rotatably attached to the oscillation device.

2. Apparatus according to claim 1, wherein the damping device (30) is directly or by means of a first structural element (190, 191) attached to the oscillation device (4) on or near one of the oscillation nodal points.

3. Apparatus according to claim 2, wherein the damping device (30) is connected with the structural unit (2) such that the damping device has an effective component which in basic oscillation lies in the direction of motion of the connecting point (7).

4. Apparatus according to any one of claims 1 to 3, wherein the oscillation device (4) comprises at least one elastic element, the configuration and/or mass of which is selected such that the energy induced by impulse or vibration is at least partially converted into oscillation energy of oscillation around oscillation nodal points.

5. Apparatus according to any one of the preceding claims, wherein the oscillation device (4) comprises at least one elastic element, such as a bending rod, preferably with a circular cross-section, a coil spring, a leaf spring, a spiral (or helical) spring, an oscillation plate or another structural member from elastic material, such as rubber, or combinations of such elastic elements.

6. Apparatus according to the preceding claim, wherein the oscillation device (4) comprises at least one rigid element (71a).

7. Apparatus according to any one of the preceding claims, wherein the oscillation device (4) comprises at least one piece (703) having notches that increase elasticity, preferably in places of strong bending during oscillation.

8. Apparatus according to any one of the preceding claims, wherein the oscillation device (4) comprises three intertwined coil springs or spiral springs, each having one connecting point (7).

9. Apparatus according to any one of the preceding claims, wherein the damping device (30) comprises an hydraulic damper or an air damper which can be modified in length.

10. Apparatus according to any one of the preceding claims, wherein the damping device (30) acts by friction between two structural members movable to each other, in particular in form of an opposite rotating motion.

11. Apparatus according to any one of the preceding claims, wherein the damping device (30) comprises a body of deformable material, preferably foam, damping the oscillations.

12. Apparatus according to any one of the preceding claims, wherein the oscillation device (4) comprises at least one auxiliary mass (5) which is arranged on said oscillation device in such a way that a particular natural oscillation characteristic results.

13. Apparatus according to the preceding claim, wherein the oscillation device comprises an elastic core material on which a plurality of auxiliary masses (701 a, 701 b, 701c) is arranged, preferably at a distance from each other, and wherein preferably damping elements (702) are arranged between the auxiliary masses.

14. Apparatus according to one of the two preceding claims, wherein at least one of the auxiliary masses (701a, 701b, 701 c) is arranged on or near at least one of the antinodes on the oscillation device.

15. Apparatus according to any one of the preceding claims, wherein the oscillation device comprises at least one damping means, which is preferably arranged on or near at least one of the antinodes on the oscillation device, and wherein the damping means comprises a container filled with oscillation-absorbing material or a cladding of the oscillation device consisting of oscillation-absorbing material.

16. Apparatus according to any one of the preceding claims comprising a translation or rotation classic dynamic vibration absorber (21, 22) which is directly or by means of a second structural element (901) attached on the oscillation device (4) on or near one oscillation nodal point and tuned to the basic oscillation of the oscillation device.

17. Apparatus according to any one of the preceding claims, wherein the oscillation device (4) is moveable in at least two oscillation directions and shows a specific natural oscillation characteristic for each of the two oscillation directions, wherein for each of the two oscillation directions at least one oscillation nodal point is formed upon excitation by impulse or vibration and at least one of each of the oscillation nodal points of the two oscillation directions forms an at least approximately shared oscillation nodal point.

18. Apparatus according to the preceding claim, wherein the oscillation device (4) is moveable in three oscillation directions and shows a specific natural oscillation characteristic for each of the three oscillation directions, wherein for each of the three oscillation directions at least one oscillation nodal point is formed upon excitation by impulse or vibration and at least one of each of the oscillation nodal points of the three oscillation directions forms an at least approximately shared oscillation nodal point.

19. Apparatus according to any one of the preceding claims for absorption of rotatory shocks or vibrations, comprising at least one, preferably a plurality of radially oriented oscillation devices (4) which may perform transversal oscillations in the rotational direction.

20. Apparatus according to any one of the preceding claims, wherein the oscillation device (4) comprises at least one elastic element acting as torsion oscillator.

21. Apparatus according to the preceding claim, wherein the torsion oscillator comprises an elastic element which generates torsion oscillations relative to one axis, such as a rod, a tube, a coil spring, a spiral spring and/or combinations of at least one of these elastic elements with at least one rigid element.

22. Apparatus according to claim 20, wherein the torsion oscillator comprises a plurality of oscillating rods which are arranged in parallel.

23. Apparatus according to any one of the preceding claims, wherein the oscillation device (4) is capable of exhibiting longitudinal oscillations having oscillation nodal points.

24. Apparatus according to any one of the preceding claims, wherein at least two oscillation devices (4) are arranged in parallel and/or in series.

25. Apparatus according to the preceding claim, wherein a first oscillation device (4) operates at a first resonance frequency and a second oscillation device connected in parallel operates at a second resonance frequency which is different from the first resonance frequency.

26. Apparatus according to any one of the preceding claims, wherein a first apparatus according to any one of the preciding claims and a second apparatus according to any one of claims 19 to 22 are connected in series, wherein rotatory shocks or vibrations remaining from the first apparatus are absorbed by the second apparatus.

27. System comprising a structural unit and a structural member which is attached to the structural unit by an apparatus according to any one of the preceding claims.

28. System according to claim 27, wherein the structural member (12) is a data storage means, such as an electronic, magnetic, optical or magneto-optical data storage means, in particular a hard disk storage means or drive for disk storage, such as CD and DVD, and wherein the structural unit (2) is a means on which the data storage means is directly or indirectly attached, in particular its housing.

29. System according to the preceding claim, comprising at least one oscillation device (4) according to claim 18, preferably a plurality of such oscillation devices connected in parallel, and preferably a damping element according to claim 11.

30. System according to claim 27, wherein the structural unit (2) is a chassis, vehicle or the moveable part of a handling system, such as that of a robot or a traversing axis, and the structural member (12) is an optical means, such as a capturing means, in particular a camera, or an optical beaming means, in particular a laser, or a mirror, or a tool, such as a milling head, a printhead, a welding machine or a wire feeder.

31. System according to the preceding claim, wherein the structural unit (2) is a vehicle and the structural member (12) is a vehicle mirror, comprising at least two, preferably three similar oscillation devices (4) connected in parallel.

32. System according to claim 27, wherein the structural unit (2) is a hand-operated machine tool, such as a jackhammer, an electric chisel, a roto hammer or a powder-actuated tool, and wherein the structural member (12) is a holding member, in particular, a handle.

33. System according to the preceding claim, wherein the oscillation device (4) is located inside the holding member.

34. System according to claim 27, wherein the structural unit (2) is a hammer head, and wherein the structural member (12) is a hammer handle, the oscillation device is situated in the hammer handle, with the oscillation device having two bending rods on which the hammer handle is pivotably attached, and wherein preferably a damping device according to claim 11 is provided in the hammer handle.

35. System according to claim 27, wherein the structural unit (2) is the base for a support frame or a table, in particular, a bench, and the structural member (12) is the support frame or table, with, in the latter case, the oscillation device (4) preferably being provided in the table leg.

36. System according to claim 27, wherein the structural unit (2) is a vehicle and the structural member (12) is a vehicle seat (230, 320, 330).

37. System according to the preceding claim, wherein the vehicle is a bicycle and the vehicle seat is a bicycle saddle (330), with the bicycle saddle being preferably supported by an additional resilient means (332).

38. System according to claim 27, wherein the structural member (2) is a support frame and the structural unit (12) is the moveable part of a handling device which is directly or indirectly attached to the support frame.

39. System according to claim 27, wherein the structural unit (2) is a first rotating means, such as a drive shaft (275), preferably of a vehicle, and the structural member (12) is a second rotating means, such as a transmission output shaft (276).

40. System according to claim 27, wherein the structural member (2) is an acoustic sensor, such as a microphone, an oscillation measuring means, a seismograph, an acoustic hearing apparatus or the like, and the structural unit (12) is a device on which the structural member is attached.

41. System according to the preceding claim, wherein the sensor is designed for capturing structure-borne sound from the structural unit (12).

42. System according to claim 27, wherein the structural unit (2) is a loudspeaker and the structural member (12) is the device on which the loudspeaker is attached.

43. System according to claim 27, wherein the structural unit (2) is a motor and the structural member (12) is a chassis or a device housing.

44. System according to the preceding claim, wherein the oscillation device has two degrees of freedom in the plane perpendicular to the motor axis.

45. System according to claim 27, wherein the structural unit (2) is a wheel hub or a vehicle axle and the structural member (12) is a chassis.

46. System according to the preceding claim, comprising an oscillation device (4) according to claim 23.

47. System according to claim 27, wherein the structural unit (2) is a sound generator, such as a vibrating machine, or a musical instrument, in particular a piano or grand piano, and the structural member (12) is a basis on which the structural unit rests.

## Revendications

1. Dispositif pour le raccordement d'un composant (12) à une unité de construction (2), comportant : a) au moins un dispositif d'oscillation (4) accouplé à l'unité de construction et au composant et présentant un comportement déterminé d'oscillation propre, où au moins un noeud d'oscillation est formé suite à une excitation par un choc ou une vibration, b) le composant étant disposé contre le dispositif d'oscillation au niveau d'au moins un point de raccordement (7) situé sur ou à proximité du ou des noeuds d'oscillation, et c) au moins un dispositif d'amortissement (30) destiné à amortir une oscillation fondamentale du dispositif d'oscillation par rapport à l'unité de construction, le dispositif d'amortissement étant fixé sur le même noeud d'oscillation que le composant, le composant étant fixé de manière rotative sur le dispositif d'oscillation.

2. Dispositif selon la revendication 1, où le dispositif d'amortissement (30) est fixé sur le dispositif d'oscillation (4) sur ou à proximité d'un des noeuds d'oscillation, directement ou par un premier élément structurel (190, 901).

3. Dispositif selon la revendication 2, où le dispositif d'amortissement (30) est relié à l'unité de construction (2) de telle manière que le dispositif d'amortissement présente une composante active orientée dans la direction de déplacement du point de raccordement (7) en cas d'oscillation fondamentale.

4. Dispositif selon l'une des revendications 1 à 3, où le dispositif d'oscillation (4) comporte au moins un élément élastique, dont la structure et/ou la masse sont sélectionnées de manière à ce que l'énergie appliquée par choc ou vibration soit au moins partiellement convertie en énergie d'une oscillation autour du noeud d'oscillation.

5. Dispositif selon l'une des revendications précédentes, où le dispositif d'oscillation (4) comporte au moins un élément élastique, telle qu'une barre de flexion, préférentiellement de section circulaire, un ressort hélicoïdal, un ressort à lame, un ressort à boudin, une plaque oscillante ou un autre composant en matériau élastique tel que le caoutchouc, ou des combinaisons de tels éléments élastiques.

6. Dispositif selon la revendication précédente, où le dispositif d'oscillation (4) comporte au moins un élément rigide (71a).

7. Dispositif selon l'une des revendications précédentes, où le dispositif d'oscillation (4) comporte au moins un pièce (703) avec des entailles augmentant l'élasticité, préférentiellement à des emplacements de forte courbure lors de l'oscillation.

8. Dispositif selon l'une des revendications précédentes, où le dispositif d'oscillation (4) comporte trois ressort hélicoïdaux ou ressorts à boudin torsadés avec un point de raccordement (7) chacun.

9. Dispositif selon l'une des revendications précédentes, où le dispositif d'amortissement (30) comporte un amortisseur hydraulique ou un amortisseur pneumatique dont la longueur peut être variée.

10. Dispositif selon l'une des revendications précédentes, où le dispositif d'amortissement (30) agit par friction entre deux composants déplaçables l'un par rapport à l'autre, en particulier par un mouvement rotatif réciproque.

11. Dispositif selon l'une des revendications précédentes, où le dispositif d'amortissement (30) comporte un corps en matériau déformable, préférentiellement en mousse synthétique, lequel amortit les oscillations.

12. Dispositif selon l'une des revendications précédentes, où le dispositif d'oscillation (4) comporte au moins une masse auxiliaire (5) disposée sur le dispositif d'oscillation de manière à produire un comportement déterminé d'oscillation propre.

13. Dispositif selon la revendication précédente, où le dispositif d'oscillation comporte un matériau d'âme élastique, sur lequel sont disposées plusieurs masses auxiliaires (701a, 701b, 701c) préférentiellement espacées l'une de l'autre, des éléments d'amortissement (702) étant préférentiellement disposés entre les masses auxiliaires.

14. Dispositif selon l'une des deux revendications précédentes, où au moins une des masses auxiliaires (701a, 701b, 701c) est disposée contre au moins un des ventres d'oscillation sur le dispositif d'oscillation, ou à proximité de celui-ci.

15. Dispositif selon l'une des revendications précédentes, où le dispositif d'oscillation comporte au moins un moyen d'amortissement, lequel est préférentiellement disposé contre au moins un des ventres d'oscillation sur le dispositif d'oscillation, ou à proximité de celui-ci, le moyen d'amortissement comportant un récipient rempli de matériau absorbant les oscillations ou une enveloppe du dispositif d'oscillation en matériau absorbant les oscillations.

16. Dispositif selon l'une des revendications précédentes, avec un pendule à translation ou rotatif (21, 22), fixé sur le dispositif d'oscillation (4) sur ou à proximité d'un noeud d'oscillation directement ou par un deuxième élément structurel (901), et coordonné à l'oscillation fondamentale du dispositif d'oscillation.

17. Dispositif selon l'une des revendications précédentes, où le dispositif d'oscillation (4) est mobile dans au moins deux directions d'oscillation et présente un comportement déterminé d'oscillation propre pour chacune des deux directions d'oscillation, au moins un noeud d'oscillation étant formé suite à une excitation par un choc ou une vibration pour chacune des deux directions d'oscillation, et au moins un des noeuds d'oscillation des deux directions d'oscillation formant un noeud d'oscillation au moins sensiblement commun.

18. Dispositif selon la revendication précédente, où le dispositif d'oscillation (4) est mobile dans trois directions d'oscillation et présente un comportement déterminé d'oscillation propre pour chacune des trois directions d'oscillation, au moins un noeud d'oscillation étant formé suite à une excitation par un choc ou une vibration pour chacune des trois directions d'oscillation, et au moins un des noeuds d'oscillation des trois directions d'oscillation formant un noeud d'oscillation au moins sensiblement commun.

19. Dispositif selon l'une des revendications précédentes, pour l'absorption de chocs ou de vibrations rotatoires, avec au moins un, préférentiellement plusieurs dispositifs d'oscillation (4) à orientation radiale, aptes à générer des oscillations transversales dans la direction de rotation.

20. Dispositif selon l'une des revendications précédentes, où le dispositif d'oscillation (4) comporte au moins un élément élastique agissant comme oscillateur de torsion.

21. Dispositif selon la revendication précédente, où l'oscillateur de torsion comporte un élément élastique qui exécute des oscillations de torsion par rapport à un axe, telle qu'une tige, un tube, un ressort hélicoïdal, un ressort à boudin et/ou des combinaisons d'au moins un de ces éléments élastiques avec au moins un élément rigide.

22. Dispositif selon la revendication 20, où l'oscillateur de torsion comporte plusieurs barres d'oscillations disposées en parallèle.

23. Dispositif selon l'une des revendications précédentes, où le dispositif d'oscillation (4) peut exécuter des oscillations longitudinales à noeud d'oscillation.

24. Dispositif selon l'une des revendications précédentes, où au moins deux dispositifs d'oscillation (4) sont disposés en parallèle et/ou l'un derrière l'autre.

25. Dispositif selon la revendication précédente, où un premier dispositif d'oscillation (4) fonctionne à une première fréquence de résonance, et un deuxième dispositif d'oscillation monté en parallèle à une deuxième fréquence de résonance différente de la première fréquence de résonance.

26. Dispositif selon l'une des revendications précédentes, où un premier dispositif selon l'une des revendications précédentes et un deuxième dispositif selon l'une des revendications 19 à 22 sont montés l'un derrière l'autre, les chocs ou les vibrations rotatoires résiduels du premier dispositif étant absorbés par le deuxième dispositif.

27. Système comprenant une unité de construction et un composant fixé à l'unité de construction par un dispositif selon l'une des revendications précédentes.

28. Système selon la revendication 27, où le composant (12) est un dispositif de mémorisation de données, tel qu'un dispositif de mémorisation de données électronique, magnétique, optique ou magnéto-optique, en particulier un dispositif de mémorisation à disque dur ou à lecteur pour des disques-mémoire tels que CD et DVD, et où l'unité de construction (2) est un dispositif sur lequel le dispositif de mémorisation de données est fixé directement ou indirectement, en particulier son boîtier.

29. Système selon la revendication précédente, comportant au moins un dispositif d'oscillation (4) selon la revendication 18, préférentiellement plusieurs dispositifs d'oscillation montés en parallèle, et préférentiellement un élément amortisseur selon la revendication 11.

30. Système selon la revendication 27, où l'unité de construction (2) est un bâti, un véhicule ou la partie mobile d'un système de manipulation tel que celui d'un robot ou d'un axe de translation, et le composant (12) un dispositif optique, tel qu'un dispositif d'enregistrement, en particulier une caméra, ou un dispositif de rayonnement optique, en particulier un laser, ou un miroir ou un outil, tel qu'une tête porte-fraise, une tête d'impression, un dispositif de soudage et une alimentation en fil métallique.

31. Système selon la revendication précédente, où l'unité de construction (2) est un véhicule et le composant (12) un rétroviseur de véhicule, avec au moins deux, préférentiellement trois dispositifs d'oscillation (4) similaires montés en parallèle.

32. Système selon la revendication 27, où l'unité de construction (2) est une machine-outil portative, telle qu'un marteau pneumatique, un ciseau électrique, une perceuse à percussion ou un pistolet de scellement, et où le composant (12) est une pièce de maintien, en particulier une poignée.

33. Système selon la revendication précédente, où le dispositif d'oscillation (4) se trouve à l'intérieur de la pièce de maintien.

34. Système selon la revendication 27, où l'unité de construction (2) est une masse de marteau, et où le composant (12) est un manche de marteau, le dispositif d'oscillation se trouve dans le manche de marteau, le dispositif d'oscillation comportant deux barres de flexion sur lesquelles le manche de marteau est fixé de manière à pouvoir pivoter, et un dispositif d'amortissement selon la revendication 11 se trouvant préférentiellement dans le manche de marteau.

35. Système selon la revendication 27, où l'unité de construction (2) est la surface d'appui pour un bâti ou une table, en particulier une table de laboratoire, et où le composant (12) est le bâti ou la table, le dispositif d'oscillation (4) se trouvant préférentiellement dans le pied de table dans le dernier cas.

36. Système selon la revendication 27, où l'unité de construction (2) est un véhicule et le composant (12) un siège de véhicule (230, 320, 330).

37. Système selon la revendication précédente, où le véhicule est un cycle et le siège de véhicule une selle pour cycle (330), la selle pour cycle étant préférentiellement supportée par un dispositif de suspension (332) complémentaire.

38. Système selon la revendication 27, où le composant (2) est un bâti et l'unité de construction (12) la partie mobile d'un appareil de manipulation fixé directement ou indirectement sur le bâti.

39. Système selon la revendication 27, où l'unité de construction (2) est un premier dispositif rotatif, tel qu'un arbre d'entraînement (275), préférentiellement d'un véhicule, et le composant (12) un deuxième dispositif rotatif, tel qu'un arbre de sortie (276).

40. Système selon la revendication 27, où le composant (2) est un capteur acoustique, tel qu'un microphone, un oscillomètre, un sismographe, un appareil auditif ou similaire, et l'unité de construction (12) un dispositif sur lequel le composant est fixé.

41. Système selon la revendication précédente, où le capteur est construit pour la détection de bruits de structure de l'unité de construction (12).

42. Système selon la revendication 27, où l'unité de construction (2) est un haut-parleur et le composant (12) est le dispositif sur lequel le haut-parleur est fixé.

43. Système selon la revendication 27, où l'unité de construction (2) est un moteur et le composant (12) un châssis de roulement ou un carter d'appareil.

44. Système selon la revendication précédente, où le dispositif d'oscillation présente deux degrés de liberté sur le plan perpendiculairement à l'axe du moteur.

45. Système selon la revendication 27, où l'unité de construction (2) est un moyeu de roue ou un essieu de véhicule, et le composant (12) un châssis de roulement.

46. Système selon la revendication précédente, comportant un dispositif d'oscillation (4) selon la revendication 23.

47. Système selon la revendication 27, où l'unité de construction (2) est un générateur de son, tel qu'une machine vibrante ou un instrument de musique, en particulier un piano ou un orgue, et le composant (12) un substrat sur lequel repose l'unité de construction.
